# EUROPEAN PATENT SPECIFICATION

(11) **EP 2 693 050 B1**
(45) Date of publication and mention of the grant of the patent: **09.09.2015**
(21) Application number: 12763989.6
(22) Date of filing: 29.03.2012
(51) Int. Cl.: F03G 7/04, F03G 6/06

(54) **CONCENTRATION DIFFERENCE POWER GENERATION DEVICE AND METHOD FOR OPERATING SAME**
VORRICHTUNG ZUR ERZEUGUNG EINES DIFFERENZSTROMS UND BETRIEBSVERFAHREN DAFÜR
DISPOSITIF DE PRODUCTION D'ÉNERGIE PAR DIFFÉRENCE DE CONCENTRATION ET MÉTHODE D'UTILISATION DE CELUI-CI

(30) Priority: 30.03.2011 JP 2011074639
(43) Date of publication of application: 05.02.2014
(73) Proprietor: Toray Industries, Inc., Tokyo, 103-8666 (JP)
(72) Inventor: TANIGUCHI, Masahide, Otsu-shi Shiga 520-8558 (JP); MAEDA, Tomohiro, Otsu-shi Shiga 520-8558 (JP)
(74) Representative: Hoefer & Partner Patentanwälte mbB
(86) International application number: PCT/JP2012/058389
(87) International publication number: WO 2012/133661

(56) References cited:
- WO-A1-02/13955
- JP-A- 2004 275 954
- JP-A- 2004 505 764
- JP-A- 2005 279 540
- JP-A- 2008 311 166
- JP-B2- 4 166 464
- US-A- 3 906 250
- US-A- 3 906 250
- US-A1- 2010 212 319
- US-A1- 2010 212 319

## Description

### TECHNICAL FIELD

The present invention relates to an apparatus in which low-concentration water having a low osmotic pressure and high-concentration water having a high osmotic pressure are brought into contact with each other through a semi-permeable membrane interposed therebetween and the resultant permeation flow due to forward osmosis phenomenon is utilized as energy to conduct hydroelectric power generation. The invention further relates to a method for operating the apparatus.

### BACKGROUND ART

US 2010/0212319 A1 disloses a method and apparatus for generating power. A first liquid comprising brine from a seawater reverse osmosis desalination process is provided on one side of a semipermeable membrane. This liquid has an osmotic pressure greater than seawater. A second liquid having an osmotic pressure less than seawater is provided on a second side of the membrane. A hydraulic pressure is provided to the first liquid that is less than the osmotic pressure difference between the first liquid and the second liquid so that some of the second liquid flows through the membrane and combines with the first liquid at a lesser rate than would occur without the hydraulic pressure thereby increasing the potential energy in the combined first and second liquids. The combined first and second liquids are delivered to a turbine thereby converting the increased potential energy into useful mechanical energy.

In recent years, various global environmental issues such as consumption of fossil fuels, depletion of resources, and increases in carbon dioxide emission have come to be actualized as a result of the economic growth of the world. Under such circumstances, novel carbon-free energy technologies including photovoltaic power generation, wind power generation, and temperature-difference power generation have been developed as energy production means and are coming to be put to practical use.

Among those technologies, the concentration-difference power generation, in particular, is a technology in which a difference in salt concentration between, for example, seawater and river water is taken out as energy, and is highly expected because this power generation utilizes natural energy sources that are substantially inexhaustible. Representative techniques for converting a difference in salt concentration into energy include concentration cells.

Furthermore, a pressure-retarded osmosis method, in which an osmotic pressure generated through a semi-permeable membrane is utilized, was proposed by Sidney Loeb as a technique for generating electricity by utilizing a concentration difference (S. Loeb, Journal of Membrane Science, Vol. 1, p.49, 1976). When two solutions differing in salt concentration (i.e., low-concentration water and high-concentration water) are separated from each other by a semi-permeable membrane, water moves from the fresh-water side to the brine side by forward osmosis phenomenon. In the pressure-retarded osmosis method, this movement is utilized to operate a hydroelectric generator.

At the time when this technique was proposed, it was thought that the possibility of practical use thereof was low from the standpoint of cost performance including the performance of the semi-permeable membrane and the efficiency of the hydroelectric generator. Because of this, little investigation has been made on practical use of that technique. However, as a result of the recent increases in energy cost and the recent improvements in the performance of semi-permeable membranes and electric generators, the possibility of practically using the concentration-difference power generation employing the pressure-retarded osmosis method has come to be reconsidered. In Japan, an attempt to simultaneously conduct wastewater treatment and power generation while utilizing the concentrated discharge water from a seawater desalination plant is being made in Fukuoka Prefecture (Non-patent Document 1 and Patent Document 1).

In the pressure-retarded osmosis method, the larger the amount of water which moves from the fresh water to brine, the more the cost performance improves. However, since the difference in osmotic pressure in the method in which seawater and fresh water are utilized is exceedingly large, organic substances contained in the fresh water are pushed strongly against the surface of the semi-permeable membrane. As a result, there is a problem that the so-called fouling is apt to occur, in which the semi-permeable membrane is fouled to decrease in performance. In view of such a problem, a technique has been developed in which the pressure difference imposed on the semi-permeable membrane is controlled, while diminishing energy loss, by applying an energy recovery unit (Patent Document 2). With respect to such techniques, investigations for practical use thereof are accelerating, and performance demonstration plants designed for practical use were construed in Norway and have come to be operated.

### BACKGROUND ART DOCUMENT

### PATENT DOCUMENT

Patent Document 1: Japanese Patent No. 4166464
Patent Document 2: International Publication WO 02/13955, pamphlet

### NON-PATENT DOCUMENT

Non-Patent Document 1: TANIOKA Akihiko, New Membrane Technology Symposium 2010 (SS-4-1), December, 2010

### SUMMARY OF THE INVENTION

### PROBLEMS THAT THE INVENTION IS TO SOLVE

However, the conventional techniques have the following problem.

The movement of a large amount of water from the low-concentration-water side to the high-concentration-water side results in a considerable decrease in the concentration of the high-concentration water. Consequently, even in one semi-permeable membrane unit in which high-concentration water is brought into contact with low-concentration water through a semi-permeable membrane, the high-concentration water has a large difference in concentration between the upstream side and the downstream side. A difference in the concentration of the high-concentration water causes a difference in osmotic pressure. Namely, in the vicinity of the inlet for high-concentration water (e.g., seawater) in a semi-permeable membrane unit, the difference in concentration between the fresh water and the seawater which are located on the surfaces of the semi-permeable membrane is large and, hence, a large forward-osmosis permeation flow per unit membrane area occurs. One the other hand, at the outlet for high-concentration water, the difference in concentration between the high-concentration water and the low-concentration water is decreased due to the fresh water which has already flowed in, resulting in a small forward-osmosis permeation flow.

Although an energy recovery unit can be used to control the pressure difference between high-concentration water and low-concentration water in a semi-permeable membrane unit, this configuration cannot accommodate such fluctuations in osmotic pressure which occur between the inlet and outlet for high-concentration water. As a result, those portions of the semi-permeable membrane through which a large permeation flow occurs are apt to be fouled, and there is a problem that attempts to inhibit the fouling result in a decrease in overall osmotic permeation amount and this in turn results in a decrease in power generation amount. There are cases where a high-concentration brine, such as a high-concentration discharge water obtained through seawater desalination or Dead Sea brine, is used for the purpose of utilizing a large concentration difference to highly efficiently generate electricity. However, the higher the concentration, the more the problem becomes severe. Consequently, it is difficult to attain stable high-efficiency power generation.

An object of the invention is to provide an apparatus in which low-concentration water having a low osmotic pressure and high-concentration water having a high osmotic pressure are brought into contact with each other through a semi-permeable membrane interposed therebetween and the permeation flow caused by forward osmosis phenomenon is utilized as energy to efficiently and stably conduct hydroelectric power generation, and is to provide a method for operating the apparatus.

### MEANS FOR SOLVING THE PROBLEMS

In order to solve the above-mentioned problem, a concentration-difference power generation apparatus of the present invention is a concentration-difference power generation apparatus in which high-concentration water and low-concentration water which differ in their concentrations are brought into contact with each other through a semi-permeable membrane unit including a semi-permeable membrane, and a resultant increase in an amount of the high-concentration water due to permeation of water from a low-concentration side to a high-concentration side caused by a forward osmotic pressure is utilized to drive an electric generator to generate electricity, in which the semi-permeable membrane unit is divided into a plurality of subunits and includes a high-concentration-side intermediate channel and a low-concentration-side intermediate channel which connect the subunits, and the concentration-difference power generation apparatus includes a pressure change mechanism disposed on at least one of the high-concentration-side intermediate channel and the low-concentration-side intermediate channel.

### ADVANTAGE OF THE INVENTION

According to the invention, it becomes possible to efficiently and stably conduct hydroelectric power generation by a technique in which low-concentration water having a low osmotic pressure and high-concentration water having a high osmotic pressure are brought into contact with each other through a semi-permeable membrane interposed therebetween and the permeation flow caused by forward osmosis phenomenon is utilized as energy.

### BRIEF DESCRIPTION OF THE DRAWINGS

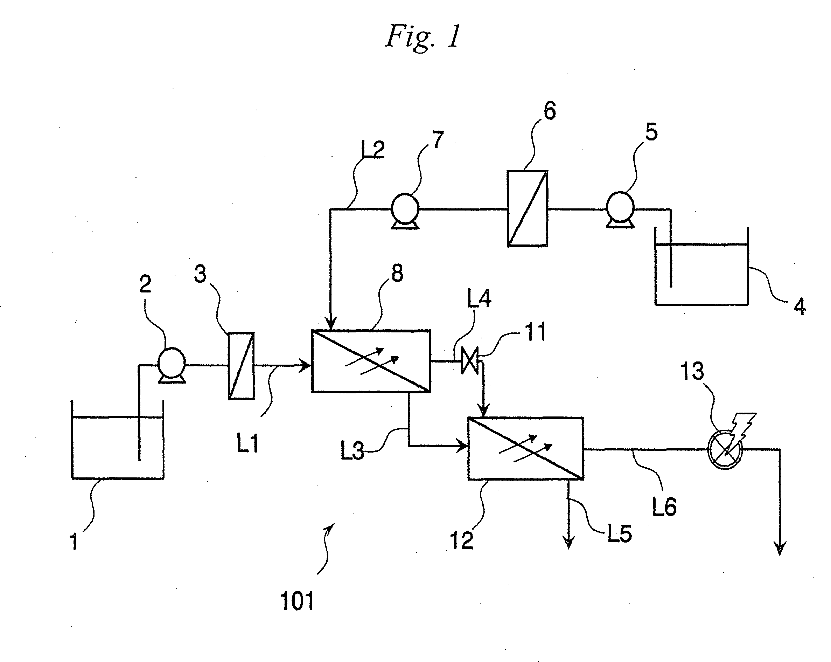

[Fig. 1] Fig. 1 is a diagrammatic flowchart which illustrates one embodiment of a concentration-difference power generation apparatus including a plurality of subunits and further including a pressure-regulating valve on a channel for high-concentration water which connects the subunits.

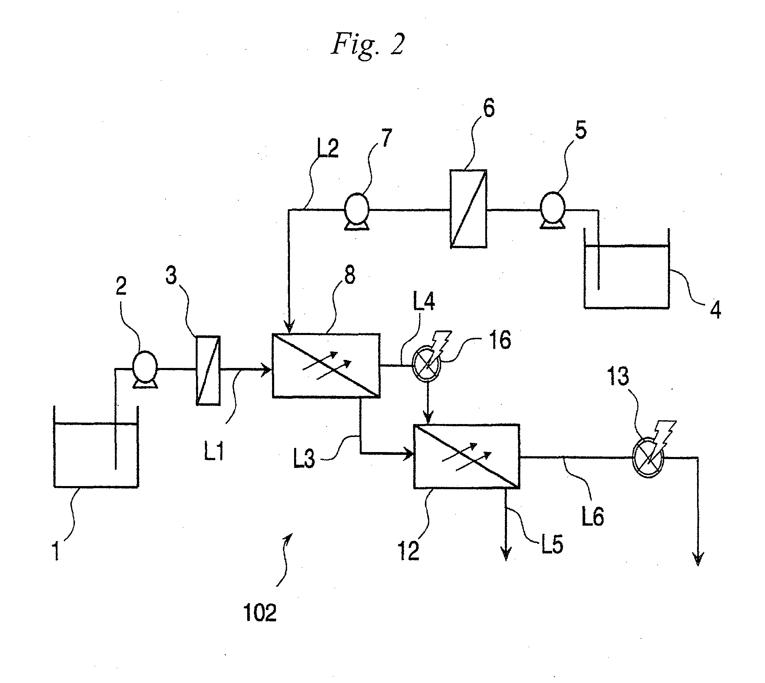

[Fig. 2] Fig. 2 is a diagrammatic flowchart which illustrates one embodiment of a concentration-difference power generation apparatus including a plurality of subunits and further including an intermediate energy recovery unit on an intermediate channel for high-concentration water which connects the subunits.

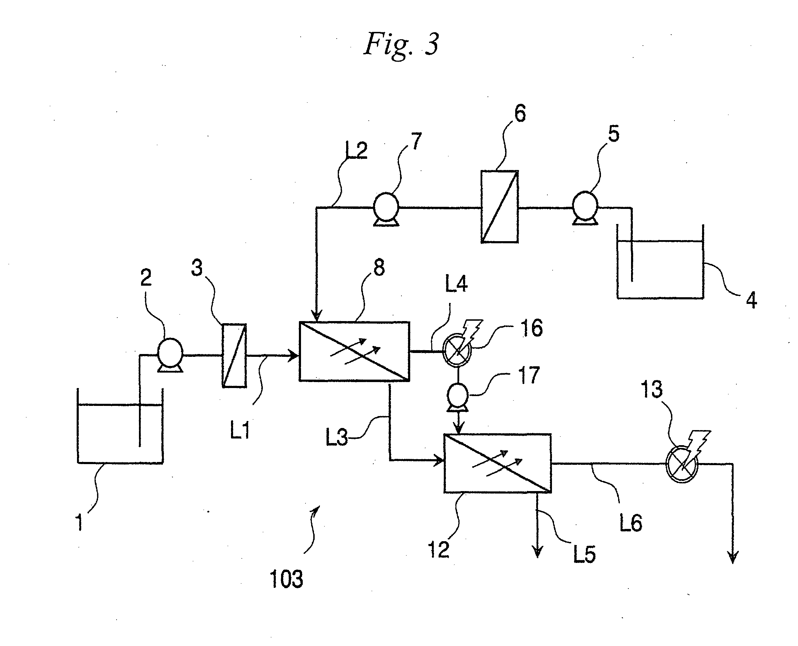

[Fig. 3] Fig. 3 is a diagrammatic flowchart which illustrates one embodiment of a concentration-difference power generation apparatus including a plurality of subunits and further including an intermediate energy recovery unit and an intermediate booster pump on an intermediate channel for high-concentration water which connects the subunits.

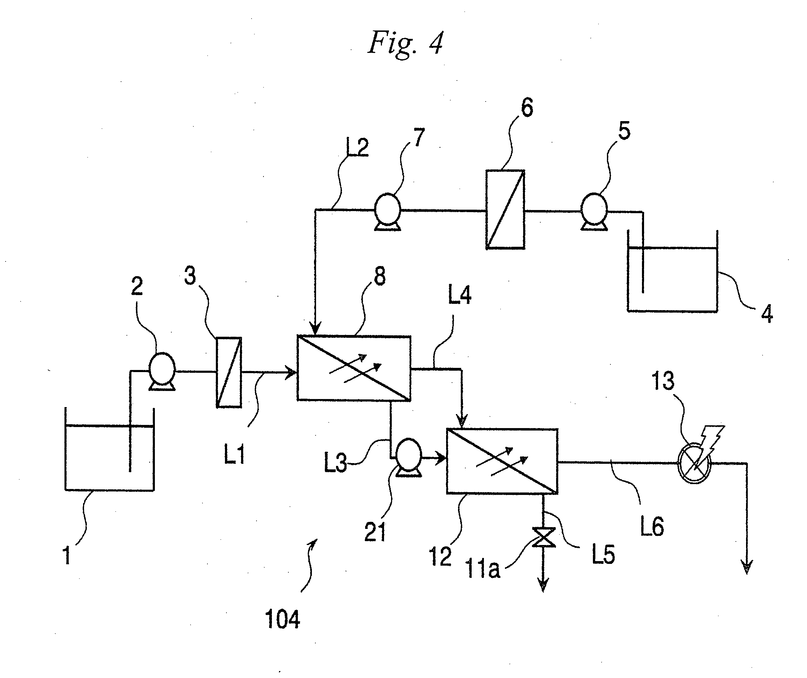

[Fig. 4] Fig. 4 is a diagrammatic flowchart which illustrates one embodiment of a concentration-difference power generation apparatus including a plurality of subunits and further including an intermediate booster pump on an intermediate channel for low-concentration water which connects the subunits.

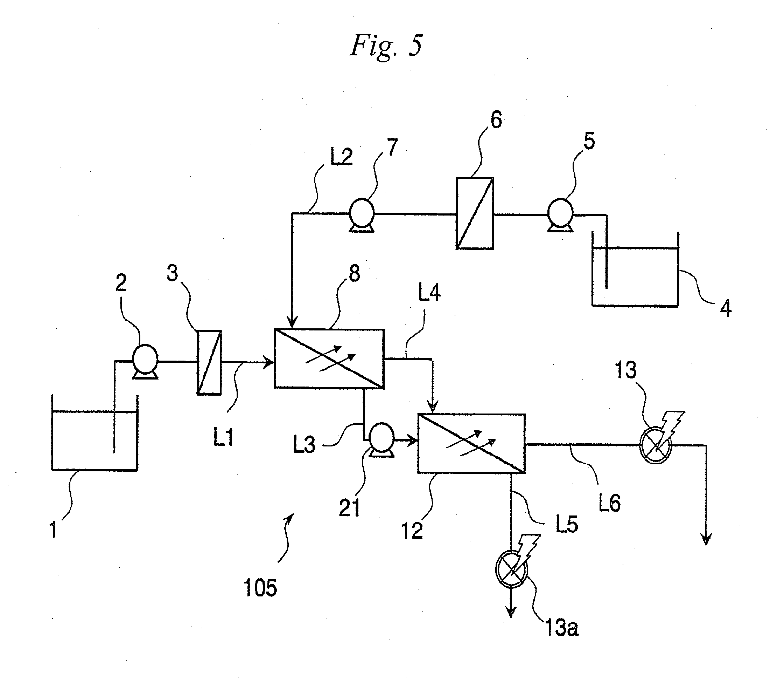

[Fig. 5] Fig. 5 is a diagrammatic flowchart which illustrates another embodiment of the concentration-difference power generation apparatus including a plurality of subunits and further including an intermediate booster pump on an intermediate channel for low-concentration water which connects the subunits.

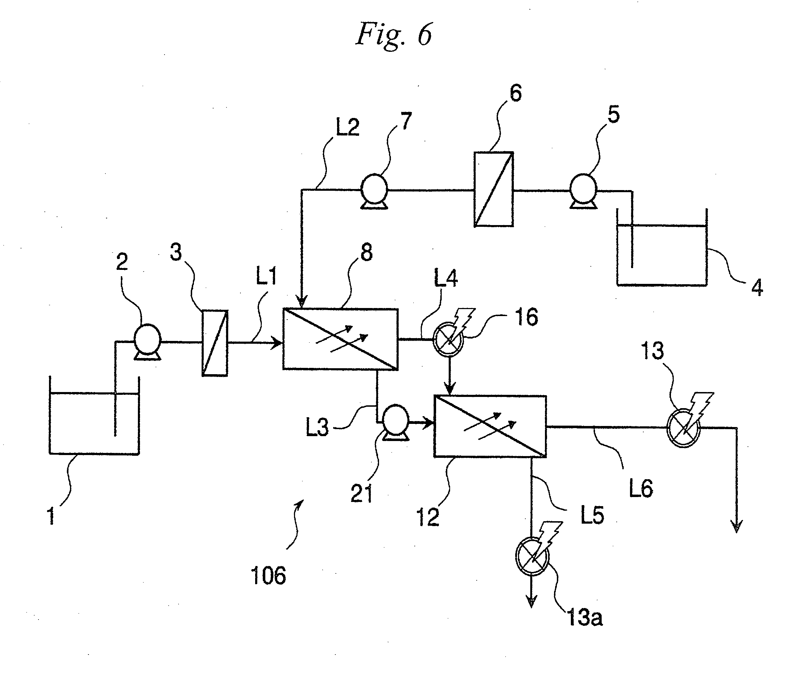

[Fig. 6] Fig. 6 is a diagrammatic flowchart illustrating one embodiment of a concentration-difference power generation apparatus including a plurality of subunits and further including an intermediate booster pump on an intermediate channel for low-concentration water which connects the subunits and an intermediate energy recovery unit on an intermediate channel for high-concentration water.

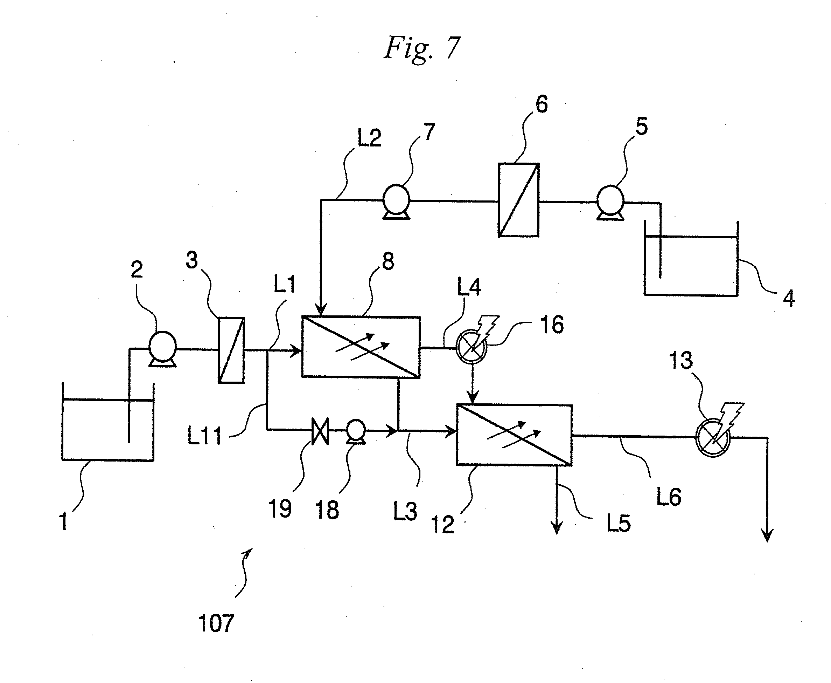

[Fig. 7] Fig. 7 is a diagrammatic flowchart which illustrates one embodiment of a concentration-difference power generation apparatus including a plurality of subunits and further including a channel through which a part of the low-concentration water to be supplied to an upstream subunit is bypassed and supplied to the low-concentration side of a downstream subunit.

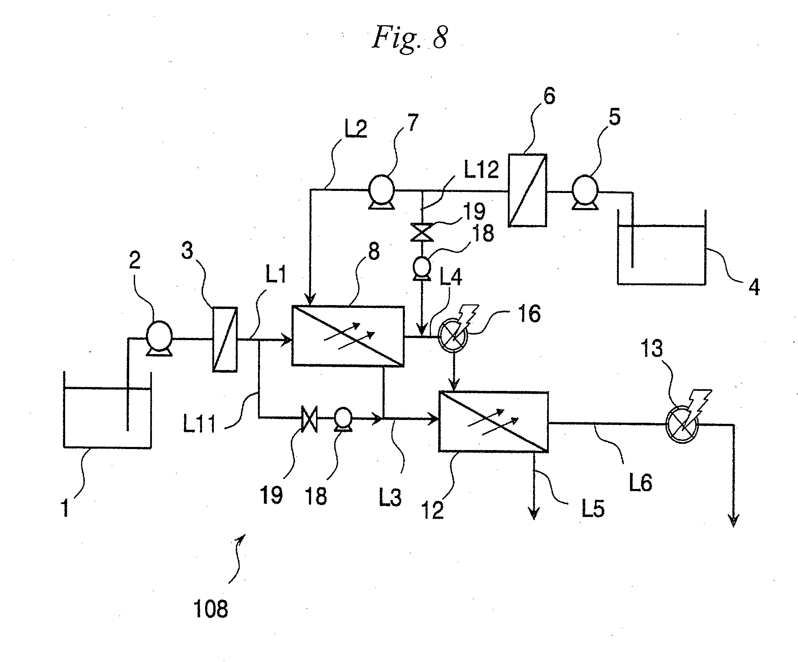

[Fig. 8] Fig. 8 is a diagrammatic flowchart which illustrates one embodiment of a concentration-difference power generation apparatus including, in addition to the bypass channel shown in Fig. 7, a channel through which a part of the high-concentration water to be supplied to an upstream subunit is bypassed and supplied to the high-concentration side of a downstream subunit.

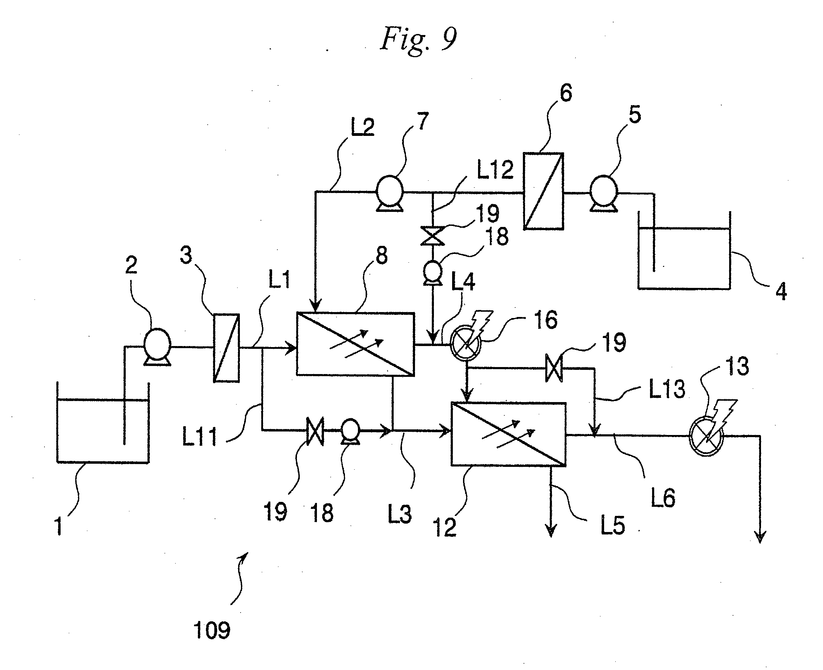

[Fig. 9] Fig. 9 is a diagrammatic flowchart which illustrates one embodiment of a concentration-difference power generation apparatus including, in addition to the two bypass channels shown in Fig. 8, a channel through which a part of the high-concentration water to be supplied to a downstream subunit is bypassed and supplied to the discharge channel for high-concentration water of the downstream subunit.

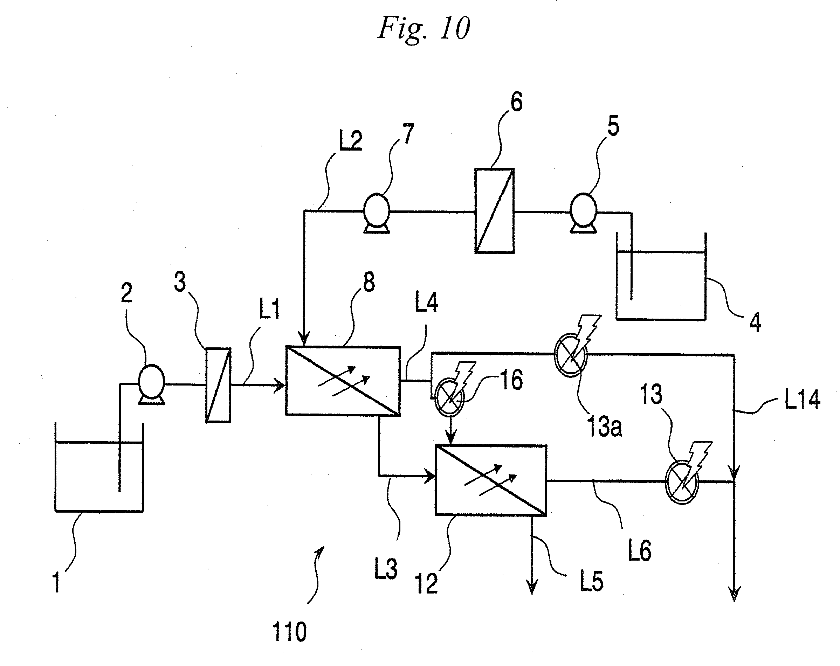

[Fig. 10] Fig. 10 is a diagrammatic flowchart which illustrates one embodiment of a concentration-difference power generation apparatus including a plurality of subunits and further including a channel for supplying a part of the water discharged from the high-concentration side of the first subunit to an electric generator and a channel for supplying the remaining high-concentration discharged water to the second subunit.

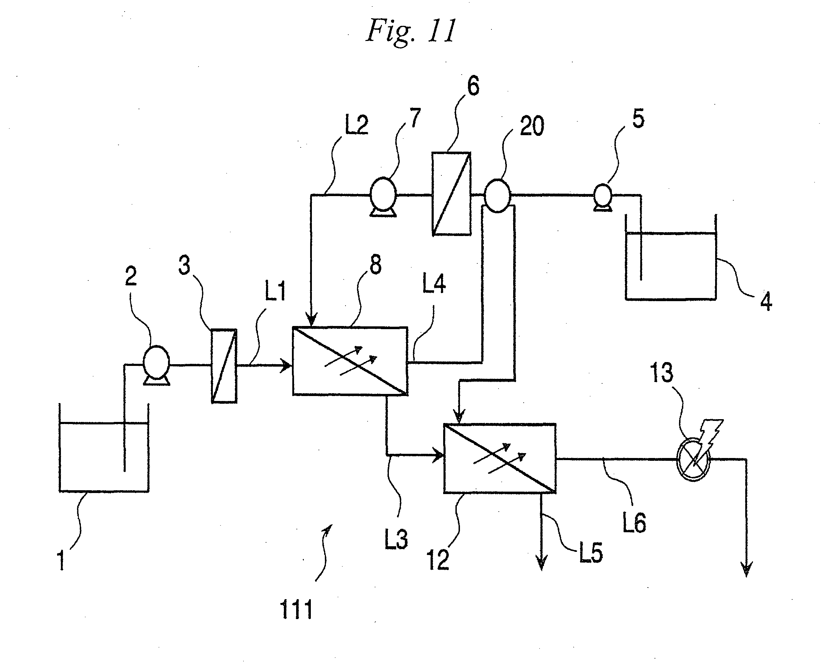

[Fig.11] Fig. 11 is a diagrammatic flowchart which illustrates one embodiment of a concentration-difference power generation apparatus including a plurality of subunits and an energy recovery unit which boosts the pressure of the first subunit.

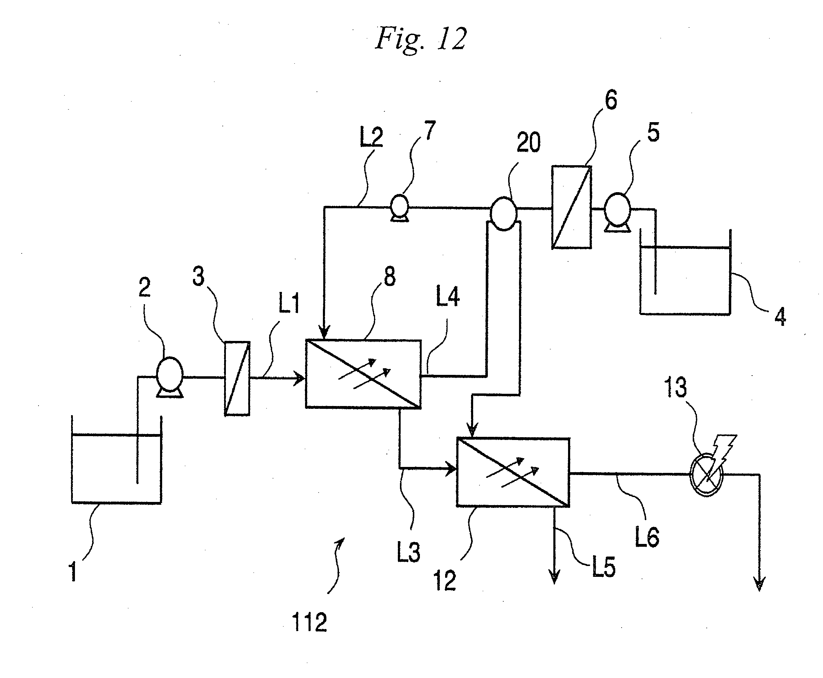

[Fig. 12] Fig. 12 is a diagrammatic flowchart which illustrates another embodiment of the concentration-difference power generation apparatus including a plurality of subunits and an energy recovery unit which boosts the pressure of the first subunit.

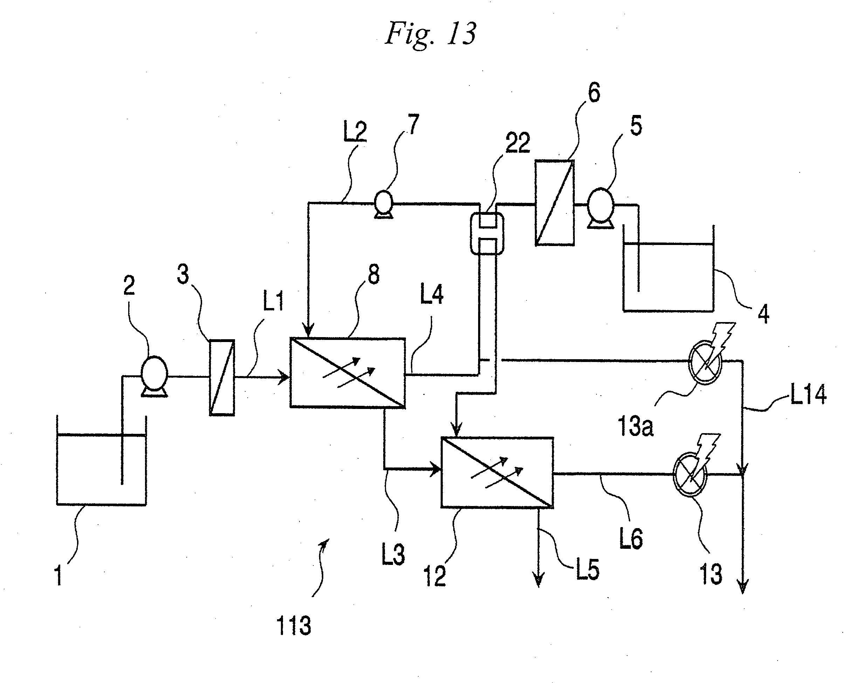

[Fig. 13] Fig. 13 is a diagrammatic flowchart which illustrates one embodiment of a concentration-difference power generation apparatus including a plurality of subunits and a pressure energy recovery unit which boosts the pressure of the first subunit.

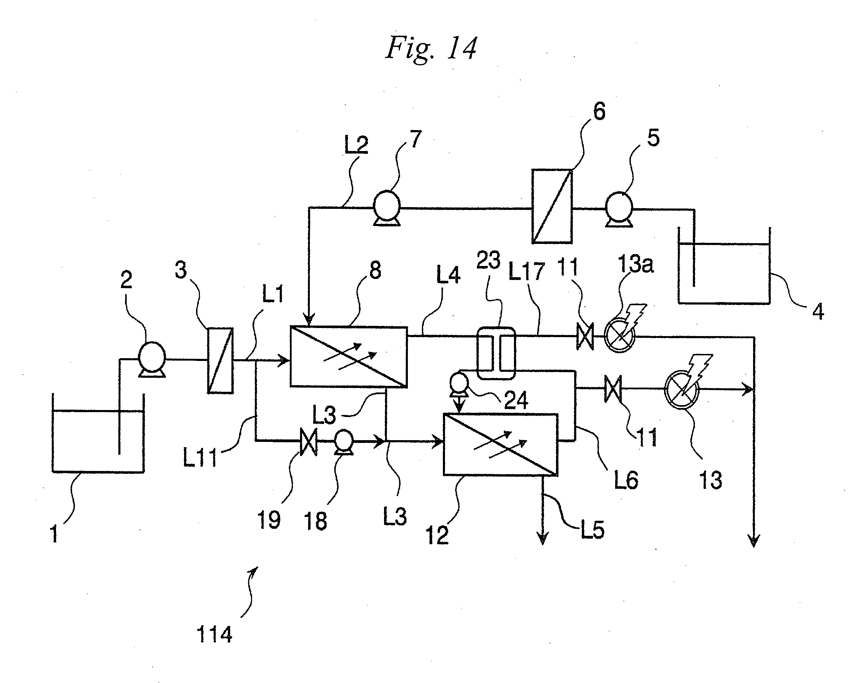

[Fig. 14] Fig. 14 is a diagrammatic flowchart which illustrates one embodiment of a concentration-difference power generation apparatus including a plurality of subunits and a pressure energy recovery unit which boosts the pressure of the second subunit.

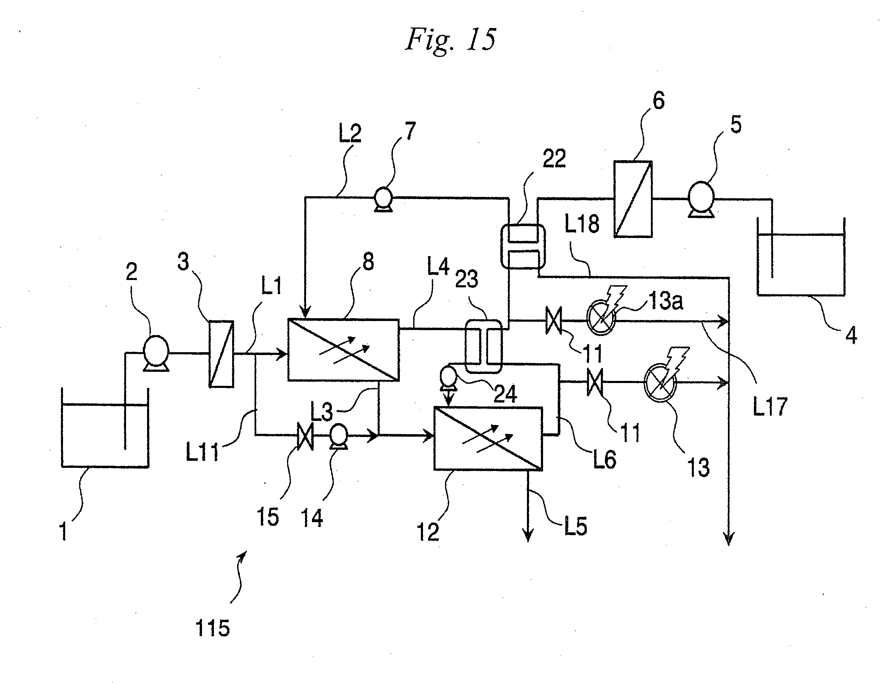

[Fig. 15] Fig. 15 is a diagrammatic flowchart which illustrates one embodiment of a concentration-difference power generation apparatus including a plurality of subunits and a pressure energy recovery unit which boosts the pressure of an upstream subunit.

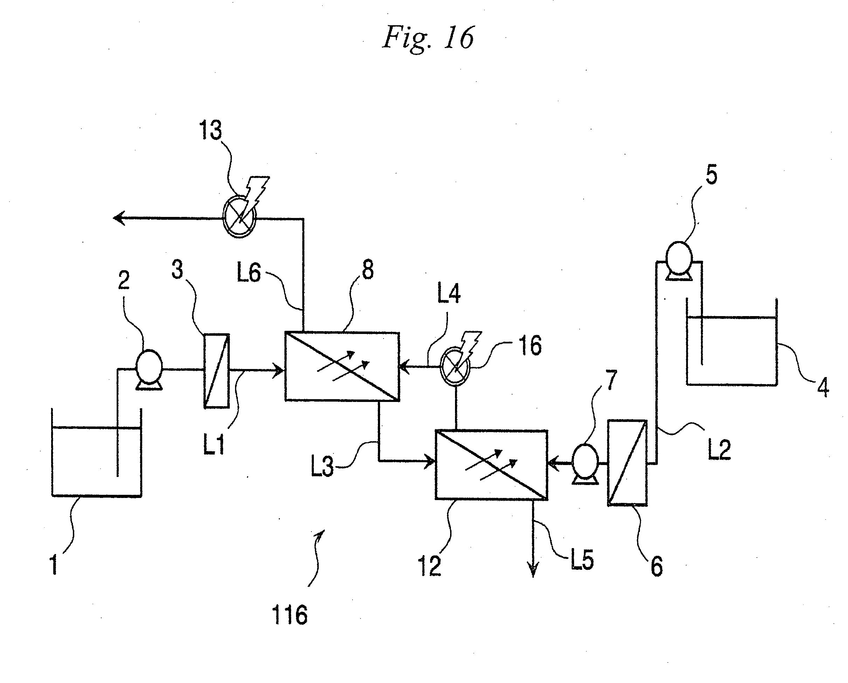

[Fig. 16] Fig. 16 is a diagrammatic flowchart illustrating one embodiment of a concentration-difference power generation apparatus including a plurality of subunits and an intermediate energy recovery unit disposed between the subunits, in which high-concentration water and low-concentration water are supplied countercurrently with each other.

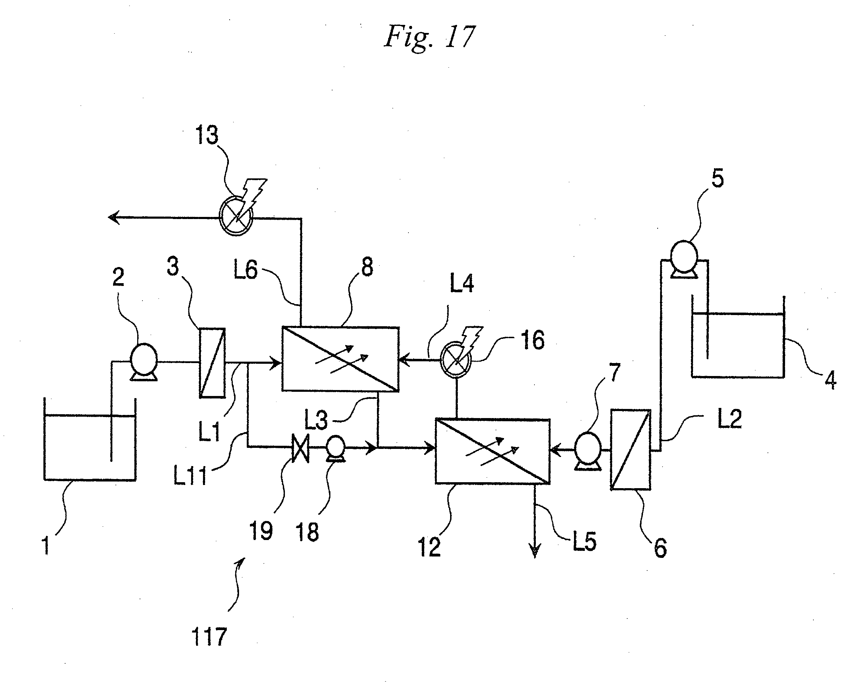

[Fig. 17] Fig. 17 is a diagrammatic flowchart illustrating one embodiment of a concentration-difference power generation apparatus which includes a plurality of subunits, to which high-concentration water and low-concentration water are supplied countercurrently with each other, and which further includes a channel through which a part of the low-concentration water to be supplied to an upstream subunit is bypassed and supplied to a downstream subunit.

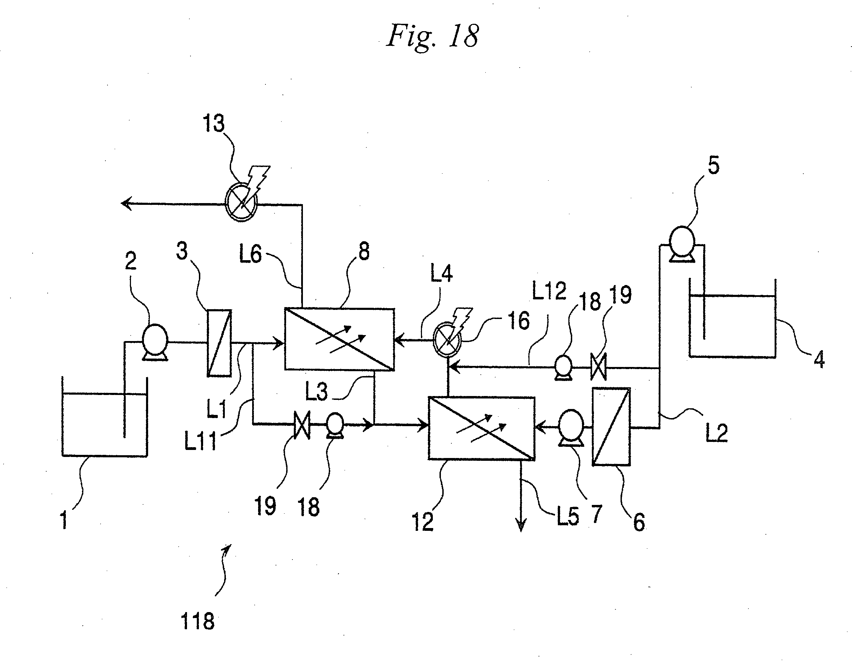

[Fig. 18] Fig. 18 is a diagrammatic flowchart illustrating one embodiment of a concentration-difference power generation apparatus which includes a plurality of subunits, to which high-concentration water and low-concentration water are supplied countercurrently with each other, and which further includes a channel through which a part of the high-concentration water to be supplied to an upstream subunit is bypassed and supplied to a downstream subunit.

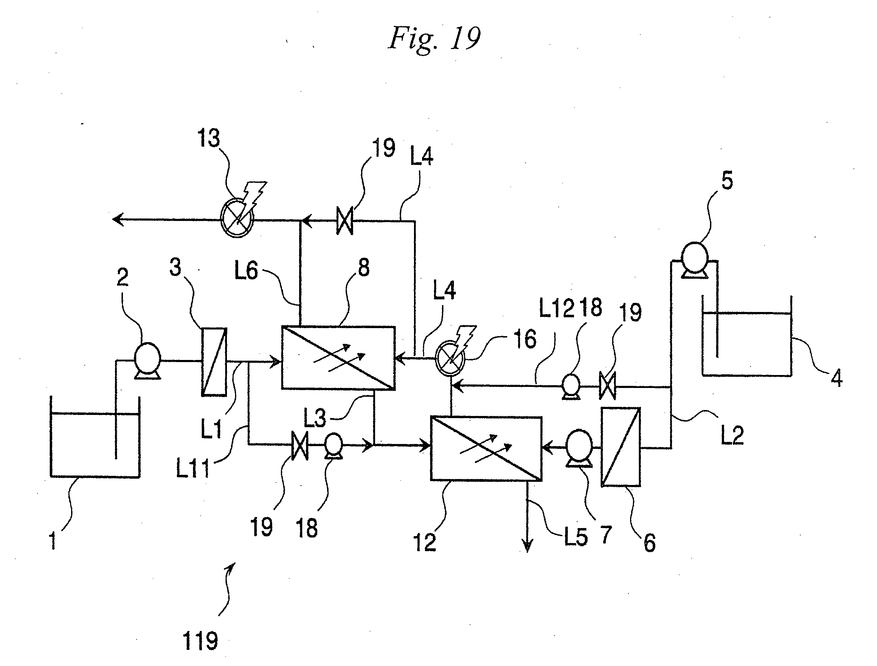

[Fig. 19] Fig. 19 is a diagrammatic flowchart which illustrates one embodiment of a concentration-difference power generation apparatus which includes a plurality of subunits, to which high-concentration water and low-concentration water are supplied countercurrently with each other, and which includes a channel through which the high-concentration water which has flowed out from an upstream subunit is bypassed and supplied to a channel for discharging high-concentration water.

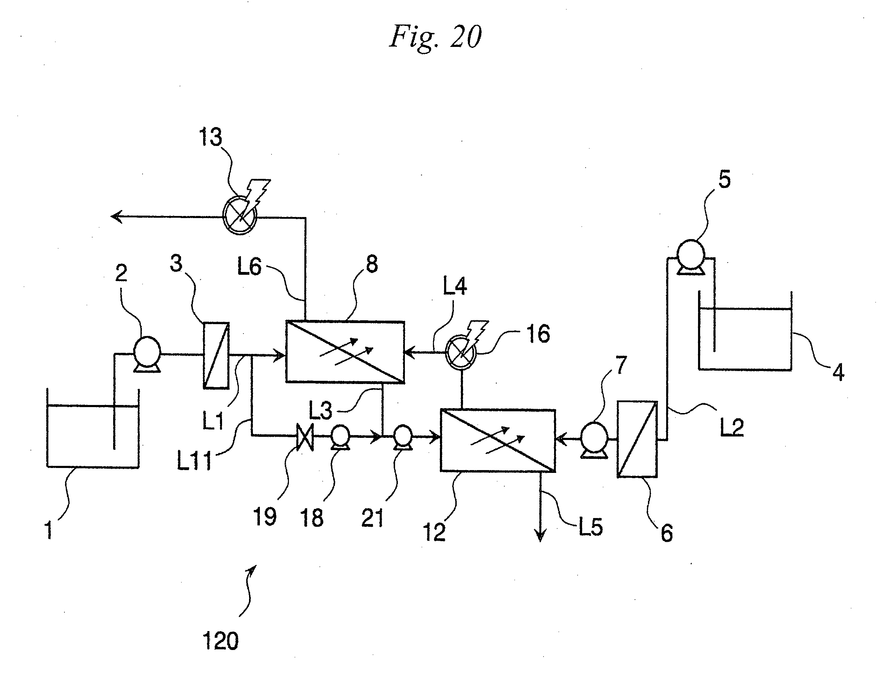

[Fig. 20] Fig. 20 is a diagrammatic flowchart which illustrates one embodiment of a concentration-difference power generation apparatus which includes a plurality of subunits, to which high-concentration water and low-concentration water are supplied countercurrently with each other, and which further includes a booster pump disposed on an intermediate channel for low-concentration water.

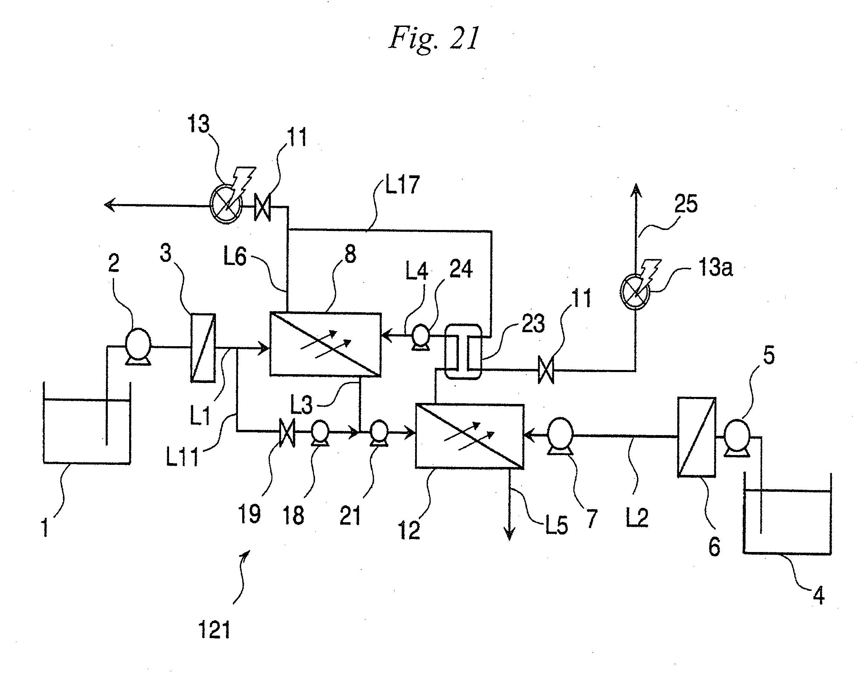

[Fig. 21] Fig. 21 is a diagrammatic flowchart which illustrates one embodiment of a concentration-difference power generation apparatus which includes a plurality of subunits and a booster pump and an isobaric type energy recovery unit disposed on an intermediate channel for high-concentration water, and which further includes electric generators disposed on branched discharge channels for high-concentration water respectively.

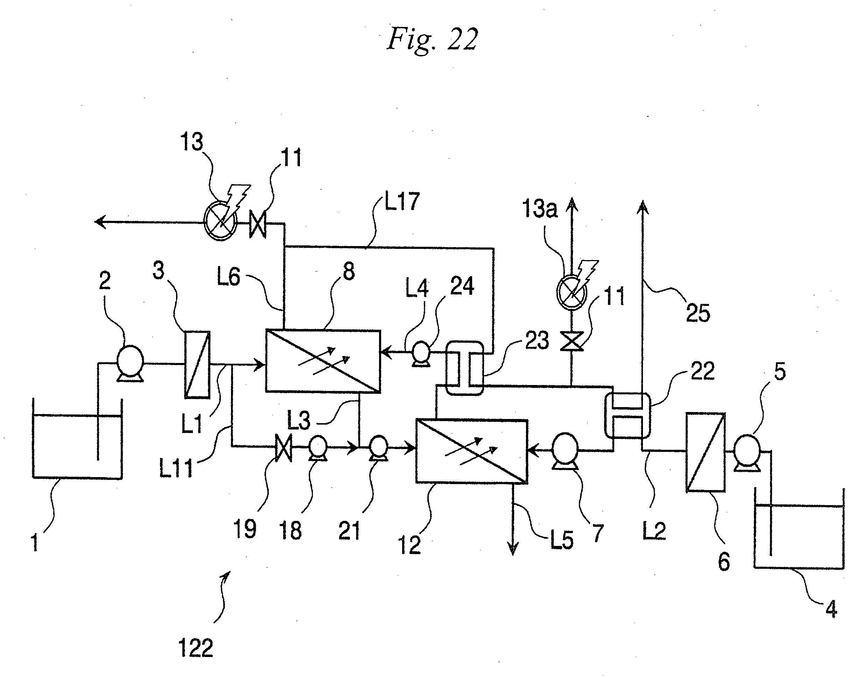

[Fig. 22] Fig. 22 is a diagrammatic flowchart which illustrates one embodiment of a concentration-difference power generation apparatus including a plurality of subunits and further including two isobaric type energy recovery units on a channel for high-concentration water.

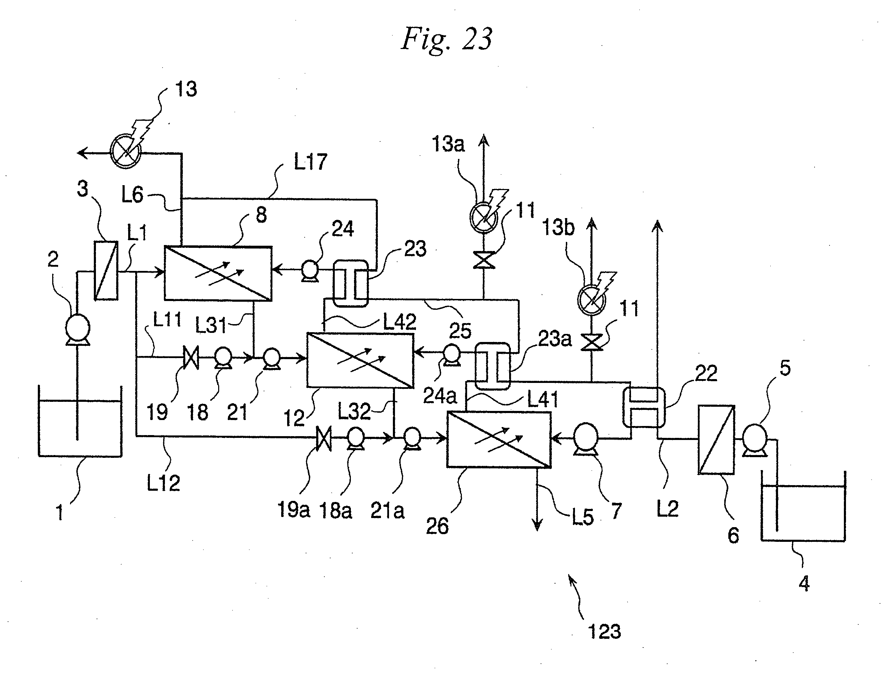

[Fig. 23] Fig. 23 is a diagrammatic flowchart which illustrates one embodiment of a concentration-difference power generation apparatus including subunits arranged in three stages and further including three isobaric type energy recovery units on a channel for high-concentration water.

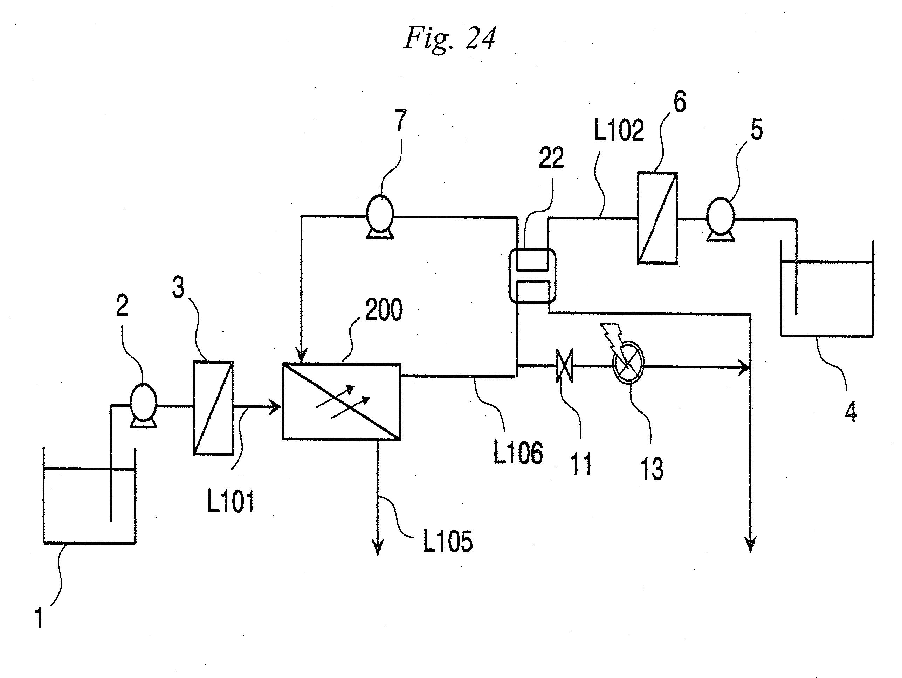

[Fig. 24] Fig. 24 is a diagrammatic flowchart which illustrates a conventional concentration-difference power generation apparatus.

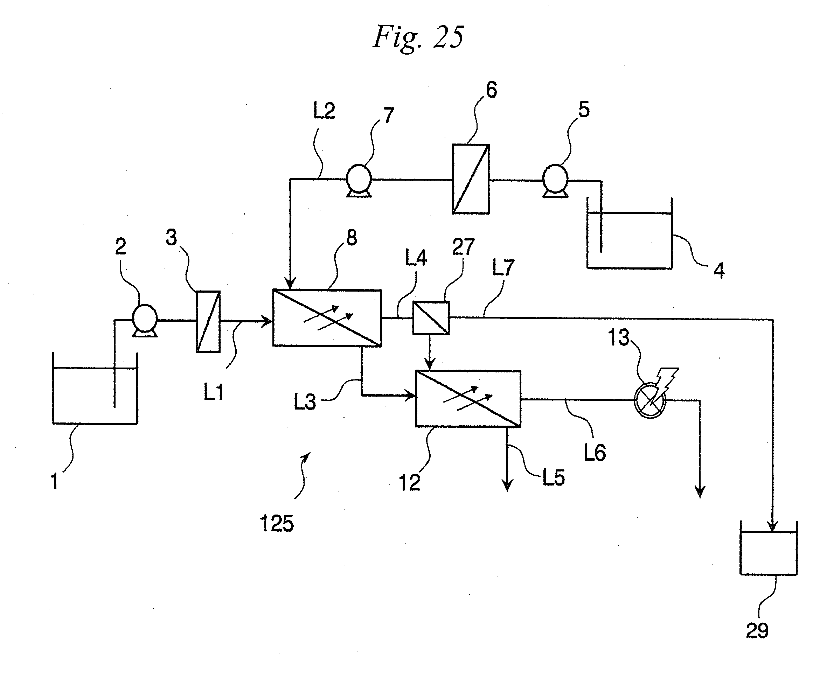

[Fig. 25] Fig. 25 is a diagrammatic flowchart which illustrates one embodiment of a concentration-difference power generation apparatus including a plurality of subunits and a desalination unit disposed on the intermediate channel for high-concentration water which connects the subunits.

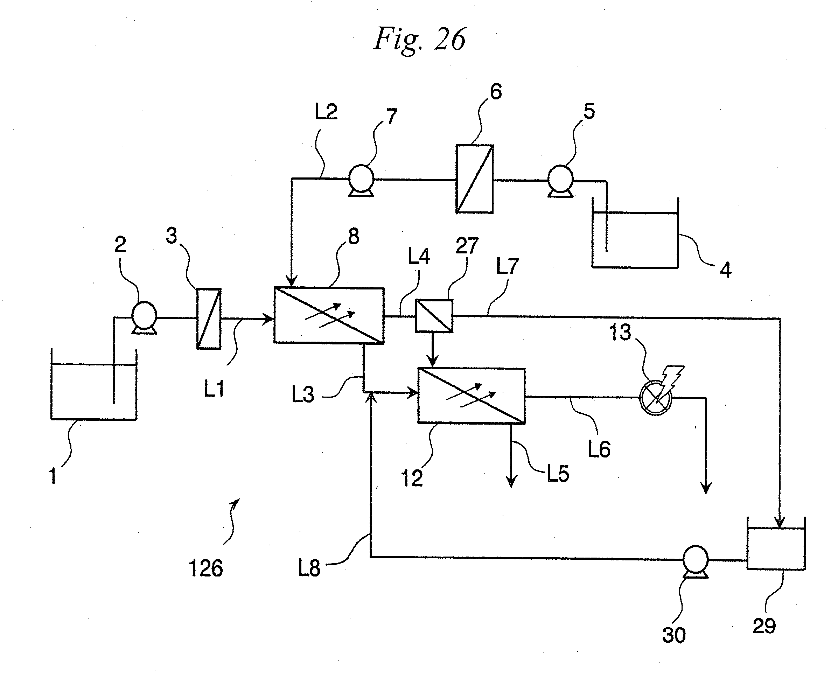

[Fig. 26] Fig. 26 is a diagrammatic flowchart which illustrates one embodiment of a concentration-difference power generation apparatus including a bypass channel extending from a desalinated-water tank to the intermediate channel for low-concentration water between the subunits, in addition to the configuration shown in Fig. 25.

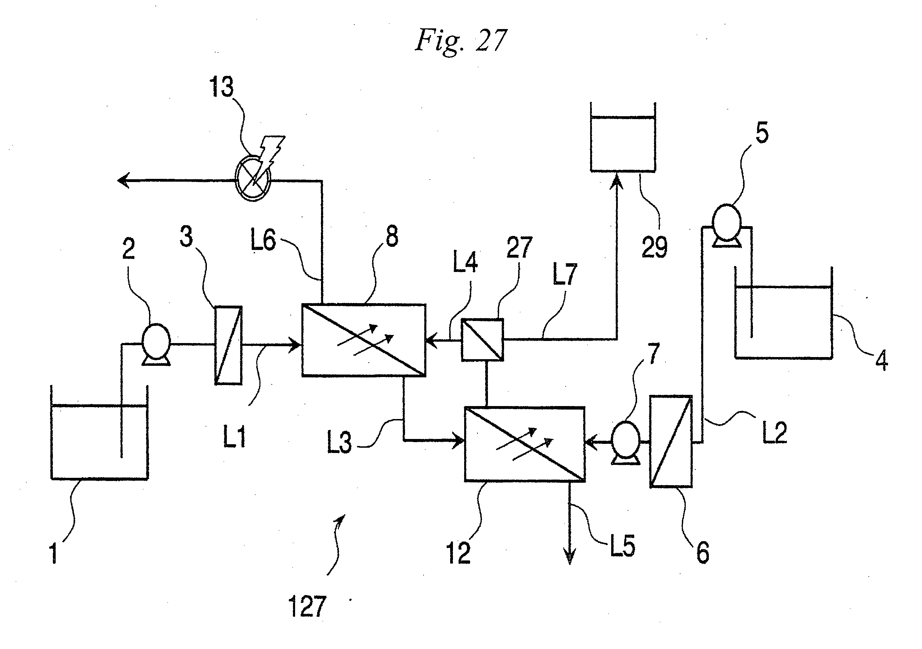

[Fig. 27] Fig. 27 shows one embodiment of a concentration-difference power generation apparatus including a plurality of subunits and a desalination unit disposed on the intermediate channel for high-concentration water which connects the subunits, in which high-concentration water and low-concentration water are supplied countercurrently with each other.

### MODE FOR CARRYING OUT THE INVENTION

Embodiments for carrying out the invention are explained below by reference to the drawings. However, the scope of the invention should not be construed as being limited to the following embodiments.

In each embodiment, configurations in the other embodiments can be applied to the configurations which are not especially mentioned. There are cases where with respect to each figure, constituent elements having like functions as in other figures are designated by the same signs and explanations thereof are omitted.

In the configurations shown in Fig. 1 to Fig. 15 and Fig. 25 to Fig. 27, low-concentration water and high-concentration water are supplied to the subunits in parallel with each other. In this description, the expression "supplied in parallel" means that low-concentration water and high-concentration water are supplied so that the two kinds of water flow in parallel between the subunits. Specifically, in parallel supply, when low-concentration water flows through a first subunit 8 and a second subunit 12 in this order, high-concentration water also flows in the order of the first subunit 8 and the second subunit 12. It is, however, noted that the term "parallel supply" does not limit the directions of the flows of the low-concentration water and high-concentration water inside the individual subunits. Consequently, when low-concentration water and high-concentration water are supplied in parallel, the low-concentration water and the high-concentration water in each subunit may be flowing in the same direction (i.e., may be flowing in parallel with each other) or may be flowing in opposite directions (i.e., may be flowing countercurrently with each other), respectively on both sides of the semi-permeable membrane.

Meanwhile, in the configurations shown in Fig. 16 to Fig. 23, low-concentration water and high-concentration water are supplied to the subunits countercurrently with each other. The countercurrent supply is a method of supply in which low-concentration water and high-concentration water are caused to flow in opposite directions. As in the case of the parallel supply, the countercurrent supply is not limited so long as low-concentration water and high-concentration water flow between the subunits in opposite directions, namely, low-concentration water and high-concentration water, when flowing between the subunits, form countercurrent flows with respect to each other. In other words, the low-concentration water and the high-concentration water in each subunit may be flowing in the same direction or may be flowing in opposite directions, respectively on both sides of the semi-permeable membrane.

In Fig. 1 to Fig. 23 and Fig. 25 to Fig. 27, signs 101 to 123 and 125 to 127 each denote a semi-permeable membrane unit. These semi-permeable membrane units each is divided into two or more subunits. The expression "is divided" means that a plurality of subunits each functioning as a semi-permeable membrane unit, a channel which connects the high-concentration sides of the subunits to each other, and a channel which connects the low-concentration-sides thereof to each other are disposed.

In the following explanations, the terms "upstream" and "preceding stage" may be replaced with each other, and the term "downstream" and the term "subsequent-stage" or "next-stage" may be replaced with each other.

Furthermore, the terms "concentration-difference power generation apparatus" and "osmotic-pressure power generation apparatus" may be replaced with each other.

### 1. First to Third Embodiments

The concentration-difference power generation apparatus shown in Fig. 1 includes a semi-permeable membrane unit and a pressure change mechanism. In the apparatus of this embodiment, a valve 11 is disposed, as one example of the pressure change mechanism, on an intermediate channel L4 for high-concentration water.

The concentration-difference power generation apparatus shown in Fig. 1 includes a low-concentration-water tank 1, a low-concentration-water intake pump 2, a low-concentration pretreatment unit 3, a high-concentration-water tank 4, a high-concentration-water intake pump 5, a high-concentration pretreatment unit 6, a booster pump 7, a semi-permeable membrane unit 101, a hydroelectric generator 13, a low-concentration supply channel L1, a high-concentration supply channel L2, a low-concentration discharge channel L5, and a high-concentration discharge channel L6.

According to need, some of the devices and members shown in the figure may be omitted, and devices and members not shown in the figure, such as, for example, a booster pump, an intermediate tank, and a protection filter, may be additionally disposed.

As shown in Fig. 1, the low-concentration-water intake pump 2 pumps up low-concentration water from the low-concentration-water tank 1 and supplies the water to the low-concentration pretreatment unit 3. The low-concentration pretreatment unit 3 filters or otherwise treats the low-concentration water to thereby obtain low-concentration water applicable to osmotic-pressure power generation. The low-concentration supply channel L1 supplies low-concentration water from the low-concentration-water tank 1 to the first subunit 8.

Furthermore, as shown in Fig. 1, the high-concentration-water intake pump 5 pumps up high-concentration water from the high-concentration-water tank 4 and supplies the water to the high-concentration pretreatment unit 6. The high-concentration pretreatment unit 6 filters or otherwise treats the high-concentration water to thereby obtain high-concentration water applicable to osmotic-pressure power generation. The booster pump 7 boosts the pressure of the high-concentration water which has undergone the pretreatment with the high-concentration pretreatment unit 6. The high-concentration supply channel L2 supplies high-concentration water from the high-concentration-water tank 4 to the first subunit 8.

The semi-permeable membrane unit 101 causes water movement from the low-concentration water to the high-concentration water by a difference in osmotic pressure between the high-concentration water and the low-concentration water. The semi-permeable membrane unit 101 is divided into a plurality of subunits. Specifically, the semi-permeable membrane unit 101 includes a first subunit 8, a second subunit 12, an intermediate channel L3 for low-concentration water, and an intermediate channel L4 for high-concentration water, the intermediate channels L3 and L4 connecting the first subunit 8 and the second subunit 12 to each other. Incidentally, the number of subunits, with which one semi-permeable membrane unit is equipped, is not limited to 2 and may be 3 or larger.

The first subunit 8 and the second subunit 12 include a semi-permeable membrane, a channel through which low-concentration water flows, and a channel through which high-concentration water flows, respectively.

The intermediate channel L3 for low-concentration water connects the low-concentration-side channel of the first subunit 8 and the low-concentration-side channel of the second subunit 12 to each other, while the intermediate channel L4 for high-concentration water connects the high-concentration-side channel of the first subunit 8 and the high-concentration-side channel of the second subunit 12 to each other.

The low-concentration water which has undergone the pretreatment first flows into the low-concentration-side channel of the first subunit 8. The high-concentration water pumped out from the booster pump 7 flows into the high-concentration-side channel of the first subunit 8. Thus, the low-concentration water and the high-concentration water come into contact with each other through the semi-permeable membrane. Due to this contact, water moves from the low-concentration-side channel to the high-concentration-side channel through the semi-permeable membrane on the basis of osmotic pressure. As a result, the flow rate of the low-concentration water as measured downstream from the first subunit 8 becomes lower than the flow rate thereof as measured upstream, while the flow rate of the high-concentration water as measured downstream from the first subunit 8 becomes higher than the flow rate thereof as measured upstream.

The low-concentration water, the amount of which has thus decreased, flows out from the first subunit 8 and is then supplied through the intermediate channel L3 for low-concentration water to the low-concentration-side channel of the second subunit 12. On the other hand, the high-concentration water, the amount of which has increased, flows out from the first subunit 8 and is then supplied through the intermediate channel L4 for high-concentration water to the high-concentration-side channel of the second subunit 12. In the second subunit 12, water moves from the low-concentration-side channel to the high-concentration-side channel as in the first subunit 8.

In this stage, the difference in concentration between the low-concentration water and the high-concentration water in the second subunit 12 is smaller than the difference in concentration between the low-concentration water and the high-concentration water in the first subunit 8. Namely, the permeation flux (i.e., permeation amount per membrane area) in the second subunit 12 is lower than the permeation flux in the first subunit 8.

However, in case where the difference in concentration between the low-concentration water and high-concentration water to be supplied to the first subunit 8 is increased in order to obtain a high permeation flux in the second subunit 12, the first subunit 8 comes to have an exceedingly high permeation flux. As a result, impurities contained in the low-concentration water are more apt to accumulate on the surface of the semi-permeable membrane and, hence, the resultant fouling is apt to reduce the performance of the semi-permeable membrane. Meanwhile, in case where the permeation flux in the first subunit 8 is regulated to a low value for the purpose of inhibiting the fouling in the first subunit, the second subunit 12 has an even lower permeation flux, making it difficult to obtain a high power generation efficiency.

The present inventors found that such problems can be overcome by disposing a pressure change mechanism in a channel between the subunits. The pressure change mechanism is a mechanism which causes a difference between the pressure on the upstream of the pressure change mechanism and the pressure on the downstream thereof.

As an example of the pressure change mechanism, a valve 11 is disposed on the intermediate channel L4 for high-concentration water, in the apparatus shown in Fig. 1. The valve 11 causes a pressure loss in the intermediate channel L4 for high-concentration water to thereby apply a higher back pressure to the permeation side of the first subunit 8 than the permeation side of the second subunit. The valve 11 thus causes a difference in back pressure between the subunits, thereby reducing the difference between the effective pressure difference for the semi-permeable membrane of the first subunit 8 and the effective pressure difference for the semi-permeable membrane of the second subunit 12. The term "effective pressure difference" herein means the value represented by (supply-side pressure)-(permeation-side pressure)+(osmotic-pressure difference).

The high-concentration water is supplied from the second subunit 12 through the high-concentration discharge channel L6 to the hydroelectric generator 13 and is then discharged from the system. The hydroelectric generator 13 converts the pressure energy possessed by the high-concentration water into electric power.

On the other hand, the low-concentration water is discharged from the second subunit 12 through the low-concentration discharge channel L5.

As explained above, in the configuration shown in Fig. 1, a pressure change mechanism is disposed on the high-concentration-side channel extending from the preceding-stage subunit to the next-stage subunit, and it is possible with this pressure change mechanism to keep the permeation flux of the preceding-stage subunit (i.e., the first subunit 8 in Fig. 1) and the permeation flux of the subsequent-stage subunit (i.e., the second subunit 12 in Fig. 1) optimal.

The configuration of the hydroelectric generator 13 is not particularly limited, and examples of the hydroelectric generator 13 include a Francis turbine, propeller turbine, Pelton turbine, cross-flow turbine, and reverse pump. A configuration of the hydroelectric generator 13 is selected in accordance with flow rate, generated pressure, etc.

As shown in Fig. 2, an intermediate energy recovery unit 16 may be disposed as a mechanism for causing the outlet of the first subunit 8 and the inlet of the second subunit 12 to differ in pressure. The intermediate energy recovery unit 16 may be used in combination with the valve 11 shown in Fig. 1 or may be used alone.

Due to the intermediate energy recovery unit 16, the pressure of the high-concentration water located downstream from the intermediate energy recovery unit 16 is rendered lower than the pressure of the high-concentration water located upstream therefrom. Incidentally, even when the intermediate energy recovery unit 16 is disposed, the high-concentration water to be supplied to the second subunit 12 is made to still have a pressure suitable for the water. Preferred as the intermediate energy recovery unit 16 is, for example, a hydroelectric generator of the in-line type capable of maintaining a pressure as measured on the downstream side of the intermediate energy recovery unit 16 (i.e., a permeation-side pressure). Examples of such a hydroelectric generator include a Francis turbine and a propeller turbine.

As shown in Fig. 3, an intermediate booster pump 17 may be disposed downstream from the intermediate energy recovery unit 16 and upstream from the second subunit 12.

In any of the embodiments described in this description, the intermediate energy recovery unit 16 may be disposed above the second subunit 12. In this configuration, it is possible to use a Pelton turbine or the like to recover the pressure energy of the high-concentration water located at the outlet of the first subunit 8. Furthermore, an intermediate tank may be disposed after the intermediate energy recovery unit 16.

### 2. Fourth to Sixth Embodiments

In another configuration for making the effective pressure difference between the subunits, a booster pump may be disposed on an intermediate channel for low-concentration water.

In the embodiment shown in Fig. 4, an intermediate booster pump 21 is disposed on an intermediate channel L3 for low-concentration water which connects the first subunit 8 and the second subunit 12. As described above, low-concentration water passes through a first subunit 8, thereby decreasing in flow rate. In this embodiment, however, the low-concentration-side pressure at the inlet of the second subunit 12 is made higher than the low-concentration-side pressure at the outlet of the first subunit 8. Consequently, the same effect as the effect obtained by lowering the high-concentration-side pressure in the first to third embodiments described above is obtained in this embodiment.

It is also possible to use an energy recovery unit such the isobaric type as pressure exchanger in place of the intermediate booster pump to utilize the pressure energy generated by the discharged water, on either the high-concentration side or the low-concentration side.

As shown in Fig. 4, a valve 11a may be disposed on the discharge channel L5 for low-concentration water. The valve 11a can maintain the low-concentration-side pressure of the second subunit 12.

Furthermore, as shown in Fig. 5, a hydroelectric generator 13a may be disposed, in place of the valve 11a shown in Fig. 4, on the discharge channel L5 for low-concentration water.

Moreover, as shown in Fig. 6, a mechanism for lowering pressure, such as the intermediate energy recovery unit 16, may be disposed on both the high-concentration side and the low-concentration side, or a mechanism for boosting pressure, such as the intermediate booster pump 21, may be disposed.

### 3. Seventh to Tenth Embodiments

In Fig. 1 to Fig. 6, which were shown above as examples, low-concentration water and high-concentration water are supplied in parallel from the first subunit 8 to the second subunit 12. Such flows are referred to as parallel flows. As described above, in the first subunit 8, the low-concentration water moves to the high-concentration side and, hence, the amount of the low-concentration water decreases and the amount of the high-concentration water increases. As a result, in the case of parallel flows, the ratio of "(flow rate of low-concentration water)/(flow rate of high-concentration water)" in the first subunit 8 differs from the ratio of "(flow rate of low-concentration water)/(flow rate of high-concentration water)" in the second subunit 12.

It is therefore preferred that the sectional-area ratio of the channel for high-concentration water to the channel for low-concentration water in the second subunit 12 should be larger than the sectional-area ratio of the channel for high-concentration water in the first subunit 8. This configuration can render that difference small.

Consequently, it is preferred that the channel sectional-area ratio of the channel for high-concentration water to the channel for low-concentration water in the second subunit 12 should be larger than the channel sectional-area ratio in the first subunit 8. Due to this configuration, the difference between the ratio of "(flow rate of high-concentration water)/(flow rate of low-concentration water)" in the second subunit 12 and the ratio of "(flow rate of high-concentration water)/(flow rate of low-concentration water)" in the first subunit 8 can be rendered small.

In the case, for example, where the semi-permeable membranes are hollow-fiber membranes and the hollow-fiber membranes packed in the first subunit and those packed in the second subunit have the same diameter, that configuration can be rendered possible by regulating the degree of packing with the hollow-fiber membranes in the second subunit 12 so as to differ from the degree of packing therewith in the first subunit 8. Namely, in the case where high-concentration water passes through the inside of the hollow-fiber membranes, the sectional-area ratio of the channel for high-concentration water in the second subunit 12 can be rendered large by making the degree of packing with the membranes in the second subunit 12 higher than the degree of packing with the membranes in the first subunit 8. In the case where high-concentration water passes outside the hollow-fiber membranes, the sectional-area ratio of the channel for high-concentration water in the second subunit 12 can be rendered large by making the degree of packing with the membranes in the second subunit 12 lower than the degree of packing with the membranes in the first subunit 8.

In the case where the semi-permeable membrane is the spiral type or the stacked type, the channel material may be configured so that the thickness thereof differs between the first subunit 8 and the second subunit 12.

Besides such changes in the structures of the first subunit 8 and second subunit 12, the following configurations can be used to obtain the same effect.

Namely, as shown in Fig. 7, a low-concentration bypass channel L11 may be disposed in parallel with the first subunit 8. The bypass channel L11 for low-concentration water serves to bypass low-concentration water and supply the low-concentration water from a position located on the upstream side of the first subunit 8 (i.e., from the supply channel L1 for low-concentration water) to the second subunit 12, which is a downstream subunit. By the low-concentration bypass channel L11, the amount of the low-concentration water to be supplied to the second subunit 12 can be increased.

A booster pump 18 and a valve 19 are disposed on the bypass channel L11 for low-concentration water. Although the booster pump 18 can be used, according to need, to impart a pressure to the low-concentration water being supplied to the second subunit 12, it is possible to omit the booster pump 18 depending on the pressure measured at the low-concentration-water outlet of the first subunit 8. By opening/closing the valve 19, the flow rate of the low-concentration water being supplied to the second subunit 12 can be controlled.

Furthermore, as shown in Fig. 8, a high-concentration bypass channel L12 which is parallel with the first subunit 8 may be disposed. Through the high-concentration bypass channel L12, high-concentration water which has not passed through the first subunit 8 is supplied from a position located on the upstream side of the first subunit 8 (i.e., from the supply channel L2 for high-concentration water) to the second subunit 12. Thus, the salt concentration of the high-concentration water present in the bypass channel L12 and in the second subunit 12 can be heightened. A booster pump 18 and a valve 19 are disposed also in the high-concentration bypass channel L12.

Moreover, as shown in Fig. 9, a high-concentration bypass channel L13 which is parallel with the second subunit 12 may be disposed. One end of the high-concentration bypass channel L13 is connected to the intermediate channel L4 at a position which is downstream from the intermediate energy recovery unit 16 and upstream from the second subunit 12. The other end of the bypass channel L13 is connected to the discharge channel L6 for high-concentration water at a position upstream from a hydroelectric generator 13. Through the high-concentration bypass channel L 13, the high-concentration water which has flowed out from the first subunit 8 flows into the high-concentration discharge channel L6 without via the second subunit 12. Thus, the flow rate of the high-concentration water being supplied to the second subunit 12 is reduced.

Furthermore, as shown in Fig. 10, a high-concentration-side bypass channel L14 may be disposed. The bypass channel L14 branches off from the intermediate channel L4 for high-concentration water at a position upstream from the intermediate energy recovery unit 16 and is connected to the discharge channel L6 for high-concentration water at a position downstream from a hydroelectric generator 13. A hydroelectric generator 13a is disposed on the bypass channel L14. Namely, through the bypass channel L14, a part of the high-concentration water discharged from the first subunit 8 is supplied to the hydroelectric generator 13a. By this configuration, the flow rate of the high-concentration water being supplied to the second subunit 12 is reduced.

### 4. Eleventh to Fifteenth Embodiments

The concentration-difference power generation apparatus may include an energy recovery unit on the downstream side of each subunit, the energy recovery unit being disposed so as to boosts the pressure of the water to be supplied to the subunit or of the water to be supplied to a subunit disposed upstream from that subunit, while utilizing the pressure energy of the water which is flowing out from that subunit. Usable as this energy recovery unit are an isobaric (pressure exchange) type device and a turbocharger, which can eliminate the necessity of a pump and hence attain a high energy efficiency. Examples of such configuration are as explained below.

In the configurations shown in Fig. 11 and Fig. 12, an energy recovery unit 20 is disposed in place of the intermediate energy recovery unit 16 included in the configuration shown in Fig. 6. In Fig. 11 and Fig. 12, the energy recovery unit 20 is disposed in the intermediate channel L4 for high-concentration water. The energy recovery unit 20 boosts the pressure of the high-concentration water to be supplied to the first subunit 8 by utilizing the pressure energy of the high-concentration water which is discharged from the first subunit 8. Specifically, in Fig. 11, the energy recovery unit 20 boosts the pressure of the high-concentration water to be supplied to the high-concentration pretreatment unit 6, thereby boosting the pressure of the high-concentration water to be supplied to the first subunit 8. In Fig. 12, the energy recovery unit 20 boosts the pressure of the high-concentration water which has been discharged from the high-concentration pretreatment unit 6, thereby boosting the pressure of the high-concentration water to be supplied to the first subunit 8. The configuration of the energy recovery unit 20 is not particularly limited. Applicable as the energy recovery unit 20 is, for example, a device which converts a water stream into electric power using a hydroelectric generator, such as that described above, to work a pump.

In the configurations shown in Fig. 11 and Fig. 12, the high-concentration water discharged from the first subunit 8 is wholly supplied to the energy recovery unit 20. In contrast, in Fig. 13, an energy recovery unit 22 is disposed in place of the energy recovery unit 20. Furthermore, as shown in Fig. 13, a bypass channel L14 which branches off from the intermediate channel L4 for high-concentration water and is connected to the high-concentration discharge channel L6 at a position downstream from a hydroelectric generator 13 may be disposed. Through the bypass channel L14, a part of the high-concentration water discharged from the first subunit 8 is supplied to the energy recovery unit 22. In the case where an isobaric type energy recovery device is used as the energy recovery unit 22, the flow rate of the high-concentration water to be supplied to the energy recovery unit 22 is regulated so as to be equal to the flow rate of the high-concentration water to be supplied to the first subunit 8. The flow rate of the water to be supplied to the energy recovery unit 22 can be regulated by means of opening/closing a valve, working a pump, regulating channel diameter, etc.

Furthermore, as illustrated in Fig. 14 and Fig. 15, pressure energy in the concentration-difference power generation apparatus can be recovered at other various positions and the pressure energy recovered can be used for pressure boosting in each portion.

In the embodiment shown in Fig. 14, an energy recovery unit 23 recovers pressure energy from a part of the high-concentration water discharged from the second subunit 12 (i.e., the high-concentration water which is passing through the high-concentration discharge channel L6), and utilizes the recovered pressure energy to boost the pressure of the high-concentration water to be supplied to the second subunit 12. Specifically, a bypass channel (branched channel) L17 is branched off from the discharge channel L6 for high-concentration water. The high-concentration water which has passed through the channel L17 supplies pressure energy to the energy recovery unit 22 and then joins again the discharge channel L6 for high-concentration water. A valve 11 and a hydroelectric generator 13a may be disposed also on the bypass channel L17 as in the case of the high-concentration discharge channel L6.

In the embodiment shown in Fig. 15, a bypass channel L18 further branches off from the bypass channel L17 at a position downstream from the energy recovery unit 23. An energy recovery unit 23 is disposed on the bypass channel L18. The energy recovery unit 23 further recovers pressure energy from a part of the high-concentration discharged water which has passed through the energy recovery unit 22, and boosts the pressure of the high-concentration water to be supplied to the first subunit 8.

### 5. Sixteenth to Twenty-third Embodiments

In Figs. 1 to 15, 25, and 26, the case of parallel supply (parallel flows) was described. In the configurations shown in Fig. 16 to Fig. 23, high-concentration water and low-concentration water are supplied countercurrently with each other.

In Fig. 16, high-concentration water passes through a high-concentration-water intake pump 5, a high-concentration pretreatment unit 6, and a booster pump 7 and is first supplied to a second subunit 12. In the second subunit 12, the forward osmosis of water from the low-concentration side to the high-concentration side occurs, and this results in an increase in the flow rate of the high-concentration water. Thereafter, the high-concentration water is reduced in pressure by a valve or an intermediate hydroelectric generator (an intermediate energy recovery unit 16 in Fig. 16) and is then supplied to a first subunit 8. In the first subunit 8, water moves from the low-concentration side to the high-concentration side, and the amount of the high-concentration water increases further. The high-concentration water which has passed through the first subunit 8 passes through a hydroelectric generator 13 and is then discharged from the system.

On the other hand, the low-concentration water which has passed through a low-concentration-water intake pump 2 and a low-concentration pretreatment unit 3 is supplied to the first subunit 8. In the first subunit 8, water is moved from the low-concentration side to the high-concentration side by forward osmosis, and the low-concentration water is then supplied to the second subunit 12. In the second subunit 12 also, water moves from the low-concentration side to the high-concentration side as described above. The low-concentration water which has passed through the second subunit is discharged from the system.

In Fig. 16 also, subunits which accommodate design flow rates are applied as the first subunit 8 and the second subunit 12.

Also in the case where low-concentration water and high-concentration water are supplied as countercurrent flows, the same bypass channel L11 as in Fig. 7 may be disposed, as illustrated in Fig. 17. By the bypass channel L11, the amount of the low-concentration water flowing through the first subunit 8 and the amount of the low-concentration water flowing through the second subunit 12 are regulated.

Furthermore, as shown in Fig. 18, a bypass channel L12 which is parallel with the second subunit 12 may be disposed. The bypass channel L12 supplies high-concentration water from the supply channel L2 for high-concentration water (i.e., from a position upstream from the second subunit 12) to the intermediate channel L4 for high-concentration water. Thus, the concentration of the high-concentration water to be supplied to the first subunit 8 can be increased.

Moreover, as shown in Fig. 19, a bypass channel L14 for high-concentration water may be disposed in parallel with the first subunit 8. This configuration makes it possible to regulate the amount of the high-concentration water to be supplied to the first subunit 8.

It is a matter of course that those bypass channels each may be disposed at one position or at a plurality of positions. Also in the case of countercurrent supply, it is possible to boost the low-concentration-side pressure before the second subunit 12, besides lowering the high-concentration-side pressure before the second subunit 12, as in the case of parallel supply. The case where both are applied is illustrated in Fig. 20. Moreover, the apparatus can further include a semi-permeable membrane desalination unit 27 as shown in Fig. 27, like the apparatus shown in Fig. 26.

In this description, the following should be noted. In countercurrent supply, although low-concentration water and high-concentration water flow between the subunits countercurrently with each other as described above, it is not essential that in each subunit, the low-concentration water and the high-concentration water flow countercurrently with each other. However, when low-concentration water and high-concentration water countercurrently flow also in each subunit, an even better balance of osmotic pressure is attained. This configuration is hence effective.

Suitable examples in which an energy recovery unit is applied in the countercurrent supply mode include, for example, the configuration shown in Fig. 21. In Fig. 21, a part of high-concentration discharged water is supplied to an energy recovery unit 23, and the energy recovered is utilized for boosting the pressure of the high-concentration water to be supplied to the first subunit 8, while the remainder of the high-concentration discharged water is supplied to a hydroelectric generator 13. Specifically, a channel L 17 which branches off from the discharge channel L6 for high-concentration water and which supplies high-concentration water to the energy recovery unit 23 is disposed.

This energy recovery device 23 preferably is an isobaric type device or a turbocharger. With these devices, energy can be directly recovered (namely, pressure of the high-concentration water can be directly boosted) without using a pump.

In this case, the high-concentration-side intermediate water 25 discharged from the energy recovery unit 23 frequently has a pressure close to the pressure possessed by the high-concentration water discharged from the second subunit 12, and pressure is applied to all of the high-pressure-side and low-pressure-side channels. Because of this, a device having suitable pressure resistance is used as the energy recovery unit.

Furthermore, an electric generator 13a may be disposed on the channel where the energy recovery unit 23 is disposed. In Fig.21, a valve 11 is disposed between the energy recovery unit 23 and the electric generator 13a.

Incidentally, in Fig. 21, an intermediate booster pump 24 is disposed on the intermediate channel L4 for high-concentration water. By the intermediate booster pump 24, a deficiency in energy recovery is compensated for and high-concentration water is smoothly supplied to the first subunit 8 when the operation of the apparatus is started. Especially from the standpoint of flexibility, it is preferred to dispose an inverter.

The high-concentration-side intermediate water 25 from the energy recovery unit 23 can be utilized, for example, for boosting the pressure of high-concentration water as illustrated in Fig. 22. Namely, the channel L17 may be branched into a channel for supplying the high-concentration intermediate water to the electric generator 13a and a channel for supplying the water to the energy recovery unit 22. The energy recovery unit 22 utilizes the pressure of the intermediate water 25 to boost the pressure of the high-concentration water to be supplied to the upstream subunit 12. Namely, the configuration shown in Fig. 22 is an example of the embodiment in which an energy recovery unit disposed downstream from, i.e., at the outlet of, the downstream subunit 8 boosts the pressure of the upstream subunit 12.

### 5. Twenty-third Embodiment

Cases where the semi-permeable membrane unit is configured of two subunits were explained above. However, the semi-permeable membrane unit may be configured of three or more subunits. When there is a large difference in concentration between low-concentration water and initial high-concentration water, a large amount of water permeates in the upstream subunit and, hence, a more even permeation flux can be rendered possible by increasing the number of subunits. Fig. 23 shows an example thereof, in which the concentration-difference power generation apparatus shown in Fig. 22, which is configured of two subunits, is modified into a concentration-difference power generation apparatus configured of three subunits.

### 6. Twenty-fifth to Twenty-seventh Embodiments

As shown in Fig. 25, a desalination unit 27 may be disposed as a pressure change mechanism. The desalination unit 27 is a filtration desalination device including a semi-permeable membrane.

The high-concentration water discharged from the first subunit 8 is supplied through an intermediate channel L4 for high-concentration water to the desalination unit 27. In the desalination unit 27, pressure energy is utilized to obtain desalinated water and concentrate. The concentrate is supplied as high-concentration water to the second subunit 12. In this embodiment, a desalinated-water tank 29 and a channel L7 extending from the desalination unit 27 to the desalinated-water tank 29 are further disposed. After supplied through the channel L7 and stored in the desalinated-water tank 29, the desalinated water may be utilized outside the system.

In the configuration shown in Fig. 26, a channel L8 which connects the desalinated-water tank 29 to the intermediate channel L3 for low-concentration water is disposed. The desalinated water is supplied as low-concentration water from the desalinated-water tank 29 through the channel L8 to the second subunit 12. Namely, a part of the high-concentration water discharged from the first subunit 8 is supplied as low-concentration water for the second subunit 12. Consequently, fluctuations in the amount of low-concentration water in the second subunit 12 can be diminished.

The desalination unit 27 to be applied here may be any desalination unit which has suitable desalination performance. The suitable desalination performance may be such performance that in the case where the desalinated water obtained is to be utilized as low-concentration water, this desalinated water has a lower salt concentration than the high-concentration water that is to flow into the subunit to which this desalinated water is to be supplied. Specifically, use may be made of a method in which the configuration of the semi-permeable membrane and the conditions for operating the desalination unit are set so as to result in a salt rejection of 90% or higher, more preferably 95% or higher.

As described above, the semi-permeable membrane desalination unit 27 may be disposed on the intermediate channel L4 for high-concentration water as shown in Fig. 27, as in the configuration shown in Fig. 26.

### 6. Configuration of the Subunits

The configuration, size, etc. of each subunit are not limited to specific ones. For example, a separation device including a pressure vessel and a fluid separation element (separation element) disposed in the pressure vessel is applicable as the subunit. The fluid separation element includes a housing and a semi-permeable membrane packed in the housing, the membrane being in the form of either hollow-fiber membranes or a flat sheet membrane. When the semi-permeable membrane is a flat sheet membrane, the fluid separation element includes, for example, a multilayer structure formed by stacking the semi-permeable membrane and a channel material and with a cylindrical center pipe in which a large number of holes are formed in the wall thereof. In such a fluid separation element, the semi-permeable membrane and the channel material are attached to the periphery of the center pipe and may be either in a flat state or in the state of being wound around the center pipe.

As the material of the semi-permeable membrane, use may be made of a polymeric material such as a cellulose acetate-based polymer, polyamide, polyester, polyimide, vinyl polymer, or the like.

The semi-permeable membrane may be an asymmetric membrane which includes a dense layer constituting at least one of the surfaces thereof and which has fine pores, the diameter of which gradually increases from the dense layer toward the inner part of the membrane or toward the other surface, or may be a composite membrane including a dense layer which is an asymmetric membrane and, formed thereon, an exceedingly thin functional layer made of another material.

### 7. With Respect to Other Constituent Elements, etc.

In the embodiments described above, the low-concentration water and the high-concentration water may be any aqueous solutions which, when in contact with each other through a semi-permeable membrane, cause a permeation flow due to a difference in osmotic pressure. Namely, the "term low-concentration water" generally means water having a relatively low salt concentration, while the term "high-concentration water" means water having a higher salt concentration than the low-concentration water. The salt concentrations of the low-concentration water and high-concentration water are not limited to specific values. However, larger differences in concentration between the low-concentration water and the high-concentration water are preferred because a large quantity of energy is inherent in such water combinations. Specifically, the high-concentration water preferably is, for example, seawater, concentrated seawater, an aqueous sodium chloride solution, as aqueous sugar solution, or an aqueous solution which contains a solute having high solubility, e.g., lithium bromide, and with which a high osmotic pressure is obtained. In particular, seawater and concentrates thereof can be easily obtained from nature. On the other hand, the low-concentration water may be any liquid having a lower osmotic pressure than the high-concentration water, such as pure water, river water, ground water, or water obtained by sewage treatment. River water and water obtained by sewage treatment are suitable because these kinds of water are available at low cost and have a concentration suitable for the low-concentration water.

The pretreatment unit 3 and the pretreatment unit 6 also are not particularly limited, and removal of suspended matter, sterilization, etc. can be applied according to the quality of the feed water to be supplied to each unit, etc.

In the case where it is necessary to remove suspended matter from the feed water, sand filtration or application of a precision filtration membrane or ultrafiltration membrane is effective. In the case where this water contains microorganisms such as bacteria and algae in a large amount, addition of a germicide is also preferred. It is preferred to use chlorine as the germicide. For example, a preferred method is to add chlorine gas or sodium hypochlorite to the feed water in an amount in the range of 1 to 5 mg/L in terms of the concentration of free chlorine. Incidentally, some semi-permeable membranes have no chemical resistance to specific germicides. In such cases, it is preferred to add a germicide to the feed water as upstream as possible and to deactivate the germicide in the vicinity of the feed water inlet of the semi-permeable membrane unit. For example, in a preferred method in the case of free chlorine, the concentration thereof is measured and, on the basis of the measured value, the amount of chlorine gas or sodium hypochlorite to be added is controlled or a reducing agent, e.g., sodium hydrogen sulfite, is added. In the case where the feed water contains bacteria, proteins, natural organic matter, or the like besides suspended matter, it is effective to add a coagulant such as poly(aluminum chloride), aluminum sulfate, iron(III) chloride, or the like. The feed water which has undergone the coagulation is treated with an inclined plate or the like to sediment the coagulated matter and is then subjected to sand filtration or to filtration with a precision filtration membrane or ultrafiltration membrane constituted of a plurality of hollow-fiber membranes bundled together. Thus, the feed water can be rendered suitable for passing through the subsequent semi-permeable membrane unit. It is especially preferred that prior to the addition of a coagulant, the pH should be regulated in order to facilitate coagulation.

In the case where sand filtration is used here as a pretreatment, it is possible to apply gravity filtration in which the water flows down naturally or it is possible to apply pressure filtration which employs a pressure tank packed with sand. Although the sand to be packed thereinto can be sand constituted of a single component, it is possible to use a combination of, for example, anthracite, silica sand, garnet, pumice, and the like to heighten filtration efficiency. The precision filtration membrane and the ultrafiltration membrane also are not particularly limited, and use can be suitably made of flat sheet membranes, hollow fiber membranes, tubular membranes, pleated type membranes, and membranes of any other shapes. The material of the membrane also is not particularly limited, and use can be made of polyacrylonitrile, poly(phenyl sulfone), poly(phenylene sulfide sulfone), poly(vinylidene fluoride), polypropylene, polyethylene, polysulfones, poly(vinyl alcohol), cellulose acetate, or inorganic materials such as ceramics. With respect to filtration modes, either the pressure filtration mode in which the feed water is filtrated while being pressurized or the suction filtration mode in which the feed water is filtered while sucking the water from the permeation side is applicable. Especially in the case of the suction filtration mode, it is also preferred to apply the so-called coagulation/membrane filtration or membrane bioreactor (MBR), in which a precision filtration membrane or an ultrafiltration membrane is immersed in a coagulation sedimentation tank or biological treatment tank to conduct filtration therewith.

Meanwhile, in the case where the feed water contains dissolved organic substances in a large amount, these organic substances can be decomposed by adding chlorine gas or sodium hypochlorite. The dissolved organic substances can be removed also by conducting pressure floatation or activated-carbon filtration. In the case where dissolved inorganic substances are contained in a large amount, a preferred method is to add an organic polyelectrolyte or a chelating agent such as sodium hexametaphosphate or to use an ion-exchange resin or the like to exchange the dissolved inorganic substances for soluble ions. In the case where iron or manganese is present in a dissolved state, it is preferred to use an aeration oxidation filtration method, a contact oxidation filtration method, or the like.

It is also possible to remove specific ions and polymers or the like beforehand and to use a nanofiltration membrane in a pretreatment for the purpose of operating the power generation apparatus according to the invention at a high efficiency.

### 8. Combinations of Embodiments

The number and position of each of the constituent elements, such as the channels, energy recovery unit, valve, and pump, explained in each embodiment can be changed. The configurations shown in separate figures can be combined with each other. Namely, embodiments obtained from the configurations explained as different embodiments through omission, addition, or combination are also included in embodiments of the invention.

Furthermore, any method of power generation using the concentration-difference power generation apparatus described herein is within the technical scope of the invention.

### <Method for Operation>

With respect to all embodiments of the power generation apparatus described herein, it is preferred that the permeation flux in each subunit should be regulated so that the maximum value thereof is kept to a set value or lower, in order to prevent the permeation flux in each subunit from becoming excessively high. For thus controlling the permeation flux, use may be made of a method in which at the time when the permeation flux in each subunit has become likely to exceed a set upper limit, the high-concentration-side pressure in this subunit is boosted relative to the low-concentration-side pressure. Namely, the control may be accomplished by boosting the pressure of the high-concentration water present in the subunit, or by lowering the pressure of the low-concentration water, or by lowering the pressure of the low-concentration water while boosting the pressure of the high-concentration water.

An explanation is given using the configuration of Fig. 1 as an example. In the case where the permeation flux in the first subunit 8 has become likely to exceed an upper limit, the high-concentration-side pressure can be relatively boosted by (a) increasing the output of the booster pump 7 and/or (b) reducing the degree of opening of the valve 11. Thus, the permeation flux in the first subunit 8 is inhibited from increasing.

In the case where the permeation flux in the second subunit 12 has become likely to exceed a set upper limit, the high-concentration-side pressure in the second subunit 12 can be boosted by increasing the degree of opening of the valve 11.

Furthermore, in each of the first and second subunits, the same effect as that produced by boosting the high-concentration-side pressure can be obtained by lowering the low-concentration-side pressure.

More specifically, the permeation flux in each subunit may be controlled in accordance with the SDI (silt density index) of the low-concentration water measured in accordance with ASTM D 4189-95. For example, the permeation flux in each subunit may be regulated to 42.5 lmh or less when SDI<1 and to (50-7.5×SDI) lmh or less when 1≤SDI≤5. The symbol "lmh" is the unit which represents liter per square meter per hour (L/m²/h). This control more effectively inhibits the fouling of the subunit, rendering a more stable operation possible.

Incidentally, in the case where SDI>5, the operation may be stopped. It is, however, noted that even when SDI>5, the subunit can be operated, and that conditions for operation stopping can be set also on the basis of the state of the low-concentration water to be used, etc.

### <Comparative Embodiment>

In the embodiment shown in Fig. 24, the concentration-difference power generation apparatus includes a semi-permeable membrane unit 200 which is not divided. In the semi-permeable membrane unit 200, in the vicinity of the inlet for high-concentration water, which is supplied through a channel L102, there is a large difference in concentration between the high-concentration water and the low-concentration water and, hence, the permeation flux is high. In contrast, in the vicinity of the outlet for high-concentration water, the difference in concentration is small and, hence, the permeation flux is low. Consequently, the problems described above are apt to arise. Incidentally, sign L101 denotes a supply channel for low-concentration water, L105 denotes a discharge channel for low-concentration water, and L106 denotes a discharge channel for high-concentration water.

### INDUSTRIAL APPLICABILITY

The present invention relates to an apparatus and a method for operating the apparatus, in which low-concentration water having a low osmotic pressure and high-concentration water having a high osmotic pressure are brought into contact with each other through a semi-permeable membrane interposed therebetween and the resultant permeation flow due to forward osmosis phenomenon is utilized as energy to conduct hydroelectric power generation. More particularly, the apparatus includes a plurality of subunits and the effective pressure difference in each subunit is optimized, thereby making it possible to efficiently and stably conduct hydroelectric power generation.

### DESCRIPTION OF REFERENCE NUMERALS AND SIGNS

1: Low-concentration-water tank
2: Low-concentration-water intake pump
3: Low-concentration pretreatment unit
4: High-concentration-water tank
5: High-concentration-water intake pump
6: High-concentration pretreatment unit
7: Booster pump
8: First subunit
11: Valve (high-concentration-side; intermediate)
11a: Valve (low-concentration-side; discharge)
12: Second subunit
13: Hydroelectric generator (high-concentration-side; discharge)
13a: Hydroelectric generator (high-concentration-side; intermediate)
13b: Hydroelectric generator (high-concentration-side; intermediate; second)
16: Intermediate energy recovery unit
17: Intermediate booster pump
18: Booster pump (first) bypass
18a: Booster pump (second) bypass
19: Valve (first) bypass
19a: Valve (second) bypass
20: Energy recovery unit (boosting up the pressure of high-concentration water or boosting up the pressure of high-concentration-side pretreated water)
21: Intermediate booster pump
22: Energy recovery unit (boosting up the pressure of pretreated water)
23: Energy recovery unit (intermediate; boosting up the pressure)
23a: Energy recovery unit (intermediate; boosting the pressure; second)
24: Intermediate booster pump
24a: Intermediate booster pump (second)
25: High-concentration-side intermediate water
26: Third subunit
27: Semi-permeable membrane desalination unit
29: Desalinated-water tank
30: Desalinated-water supply pump
101-127, 200: Semi-permeable membrane unit
L1, L101: Supply channel for low-concentration water
L2, L102: Supply channel for high-concentration water
L5, L105: Discharge channel for low-concentration water
L6, L106: Discharge channel for high-concentration water
L7: Channel for desalinated water
L8: Supply channel for desalinated water
L11: Bypass channel for low-concentration water
L12-L14: Bypass channel for high-concentration water
L17, L18: Branched channel from discharge channel for high-concentration water
L41-L42: Intermediate channel for high-concentration water
L31-L32: Intermediate channel for low-concentration water

## Claims

1. A concentration-difference power generation apparatus in which high-concentration water and low-concentration water which differ in their concentrations are brought into contact with each other through a semi-permeable membrane unit (100) comprising a semi-permeable membrane, and a resultant increase in an amount of the high-concentration water due to permeation of water from a low-concentration side to a high-concentration side caused by a forward osmotic pressure is utilized to drive an electric generator (13) to generate electricity,
wherein the semi-permeable membrane unit (100) is divided into a plurality of subunits (8, 12) and comprises a high-concentration-side intermediate channel (L4) and a low-concentration-side intermediate channel (L3) which connect the subunits (8, 12), and
the concentration-difference power generation apparatus comprises a pressure change mechanism disposed on at least one of the high-concentration-side intermediate channel (L4) and the low-concentration-side intermediate channel (L3).

2. The concentration-difference power generation apparatus according to claim 1, wherein the pressure change mechanism comprises at least one of an energy recovery unit (20, 22, 23, 23a) and a desalination unit (27).

3. The concentration-difference power generation apparatus according to claim 2, wherein the pressure change mechanism comprises an isobaric type energy recovery unit.

4. The concentration-difference power generation apparatus according to any one of claims 1 to 3, which comprises a bypass channel (L11) for supplying a part of the low-concentration water to be supplied to a subunit located upstream in an direction of flow of the low-concentration water, to at least one subunit located downstream.

5. The concentration-difference power generation apparatus according to any one of claims 1 to 4, which further comprises a channel for supplying, to the electric generator (13), a part of the high-concentration water discharged from a subunit located upstream in a direction of flow of the high-concentration water,
and comprises a channel for supplying the remainder of the discharged high-concentration water to at least one subunit located downstream.

6. The concentration-difference power generation apparatus according to any one of claims 1 to 5, which comprises an energy recovery unit (22) disposed at an outlet of at least one subunit, on the intermediate channel (L41 - L42) for the high-concentration water, and
the energy recovery unit (20) boosts a pressure of the subunit or a subunit located upstream therefrom.

7. The concentration-difference power generation apparatus according to any one of claims 1 to 6, which is configured so that the high-concentration water and the low-concentration water are supplied substantially in parallel with each other, to the subunits (8, 12).

8. The concentration-difference power generation apparatus according to any one of claims 1 to 6, which is configured so that the high-concentration water and the low-concentration water are supplied substantially countercurrently with each other, to the subunits (8, 12).

9. The concentration-difference power generation apparatus according to any one of claims 1 to 8, which comprises a booster pump (7, 18, 18a), as the pressure change mechanism, on at least one of the intermediate channels (L31 - L32) for the low-concentration water disposed between the subunits.

10. The concentration-difference power generation apparatus according to any one of claims 1 to 9, which comprises a booster pump (7, 18, 18a), as the pressure change mechanism, on at least one of the intermediate channels (L41 - L42) for the high-concentration water disposed between the subunits.

11. The concentration-difference power generation apparatus according to claim 9 or 10, wherein the apparatus comprises an isobaric type energy recovery unit as the pressure change mechanism,
the isobaric type energy recovery unit is connected to a pressure-receiving-side discharge channel, and
the pressure-receiving-side discharge channel is connected to a power generation unit.

12. A method for operating a concentration-difference power generation apparatus,
wherein, in the concentration-difference power generation apparatus, high-concentration water and low-concentration water which differ in their concentrations are brought into contact with each other through a semi-permeable membrane unit (100) comprising a semi-permeable membrane, and a resultant increase in an amount of the high-concentration water due to permeation of water from a low-concentration side to a high-concentration side caused by a forward osmotic pressure is utilized to drive an electric generator (13) to generate electricity,
the semi-permeable membrane unit (100) is divided into a plurality of subunits (8, 12) and comprises a channel (L4) for the high-concentration water and a channel (L3) for the low-concentration water which connect the subunits (8, 12), and the apparatus comprises a pressure change mechanism disposed on at least one of the channel (L4) for the high-concentration water and the channel (L3) for the low-concentration water, and
the method comprises controlling the apparatus so that a maximum value of a permeation amount per membrane area of at least one subunit (8, 12) is kept to a set value or lower.

13. The method for operating a concentration-difference power generation apparatus according to claim 12, which comprises an operation in which, in accordance with SDI (silt density index) of the low-concentration water measured in accordance with ASTM D 4189-95, the maximum value of the permeation amount per membrane area of the subunit is regulated to 42.5 Imh or less when SDI<1, and the maximum value thereof is regulated to (50-7.5*SDI) lmh or less when 1<=SDI<=5.

## Patentansprüche

1. Konzentrationsunterschied-Stromerzeugungsvorrichtung, in der hoch konzentriertes Wasser und niedrig konzentriertes Wasser, die sich in ihren Konzentrationen unterscheiden, miteinander durch eine semipermeable Membraneinheit (100), die eine semipermeable Membran aufweist, in Kontakt gebracht werden, und in der eine daraus resultierende Erhöhung in einer Menge des hoch konzentrierten Wassers infolge einer Permeation von Wasser von einer Niedrig-Konzentrations-Seite zu einer Hoch-Konzentrations-Seite, die durch einen forward-osmotischen Druck bewirkt wird, verwendet wird, um einen Stromgenerator (13) anzutreiben, um Strom zu erzeugen,
- wobei die semipermeable Membraneinheit (100) in eine Mehrzahl von Sub-Einheiten (8, 12) geteilt ist und einen Hoch-Konzentrations-Seite-Zwischenkanal (L4) und einen Niedrig-Konzentrations-Seite-Zwischenkanal (L3) aufweist, die die Sub-Einheiten (8, 12) verbinden, und
- wobei die Konzentrationsunterschied-Stromerzeugungsvorrichtung einen Druckänderungsmechanismus aufweist, der auf dem Hoch-Konzentrations-Seite-Zwischenkanal (L4) und/oder dem Niedrig-Konzentrations-Seite-Zwischenkanal (L3) angeordnet ist.

2. Konzentrationsunterschied-Erzeugungsvorrichtung gemäß Anspruch 1, wobei der Druckänderungsmechanismus eine Energierückgewinnungseinheit (20, 22, 23, 23a) und/oder eine Entsalzungseinheit (27) aufweist.

3. Konzentrationsunterschied-Stromerzeugungsvorrichtung gemäß Anspruch 2, wobei der Druckänderungsmechanismus eine isobare Energierückgewinnungseinheit aufweist.

4. Konzentrationsunterschied-Stromerzeugungsvorrichtung gemäß einem der Ansprüche 1 bis 3, die einen Umgehungskanal (L11) zum Zuführen eines Teils des niedrig konzentrierten Wassers, das einer Sub-Einheit zuzuführen ist, die stromaufwärts bezüglich einer Fließrichtung des niedrig konzentrierten Wassers angeordnet ist, zu zumindest einer Sub-Einheit, die stromabwärts angeordnet ist, aufweist.

5. Konzentrationsunterschied-Stromerzeugungsvorrichtung gemäß einem der Ansprüche 1 bis 4, die ferner einen Kanal zum Zuführen eines Teils des hoch konzentriertes Wassers, das von einer Sub-Einheit abgegeben wird, die stromaufwärts bezüglich einer Fließrichtung des hoch konzentrierten Wassers angeordnet ist, zum Stromgenerator (13) aufweist,
- und einen Kanal zum Zuführen der Restmenge des abgegebenen, hoch konzentrierten Wassers an zumindest eine Sub-Einheit, die stromabwärts angeordnet ist, aufweist.

6. Konzentrationsunterschied-Stromerzeugungsvorrichtung gemäß einem der Ansprüche 1 bis 5, die eine Energierückgewinnungseinheit (22) aufweist, die an einem Auslass von zumindest einer Sub-Einheit auf dem Mittelkanal (L41 bis L42) für das hoch konzentrierte Wasser angeordnet ist, und
- wobei die Energierückgewinnungseinheit (20) einen Druck der Sub-Einheit oder einer Sub-Einheit, die davon stromaufwärts angeordnet ist, verstärkt.

7. Konzentrationsunterschied-Stromerzeugungsvorrichtung gemäß einem der Ansprüche 1 bis 6, die eingerichtet ist, sodass das hoch konzentrierte Wasser und das niedrig konzentrierte Wasser den Sub-Einheiten (8, 12) im Wesentlichen parallel zueinander zugeführt wird.

8. Konzentrationsunterschied-Stromerzeugungsvorrichtung gemäß einem der Ansprüche 1 bis 6, die eingerichtet ist, sodass das hoch konzentrierte Wasser und das niedrig konzentrierte Wasser den Sub-Einheiten (8, 12) im Wesentlichen im Gegenstrom zueinander zugeführt wird.

9. Konzentrationsunterschied-Stromerzeugungsvorrichtung gemäß einem der Ansprüche 1 bis 8, die eine Druckerhöhungspumpe (7, 18, 18a) als Druckänderungsmechanismus auf zumindest einem der Mittelkanäle (L31 bis L32) für das niedrig konzentrierte Wasser aufweist, die zwischen den Sub-Einheiten angeordnet ist.

10. Konzentrationsunterschied-Stromerzeugungsvorrichtung gemäß einem der Ansprüche 1 bis 8, die eine Druckerhöhungspumpe (7, 18, 18a) als Druckänderungsmechanismus auf zumindest einem der Mittelkanäle (L41 bis L42) für das hoch konzentrierte Wasser aufweist, die zwischen den Sub-Einheiten angeordnet ist.

11. Konzentrationsunterschied-Stromerzeugungsvorrichtung gemäß Anspruch 9 oder 10, wobei die Vorrichtung eine isobare Energierückgewinnungseinheit als Druckänderungsmechanismus aufweist,
- wobei die isobare Energierückgewinnungseinheit mit einem Druckaufnahmeseite-Abgabekanal verbunden ist, und
- der Druckaufnahmeseite-Abgabekanal mit einer Stromerzeugungseinheit verbunden ist.

12. Verfahren zum Betätigen einer Konzentrationsunterschied-Stromerzeugungsvorrichtung,
- wobei in der Konzentrationsunterschied-Stromerzeugungsvorrichtung hoch konzentriertes Wasser und niedrig konzentriertes Wasser, die in ihren Konzentrationen unterschiedlich sind, miteinander durch eine semipermeable Membraneinheit (100), die eine semipermeable Membran aufweist, in Kontakt gebracht werden, und in der eine daraus resultierende Erhöhung in einer Menge des hoch konzentrierten Wassers infolge der Permeation von Wasser von einer Niedrig-Konzentrationsseite zu einer Hoch-Konzentrationsseite, die durch einen forward-osmotischen Druck bewirkt wird, verwendet wird, um einen Stromgenerator (13) anzutreiben, um Strom zu erzeugen,
- wobei die semipermeable Membraneinheit (100) in eine Mehrzahl von Sub-Einheiten (8, 12) geteilt ist, und einen Kanal (L4) für das hoch konzentrierte Wasser und einen Kanal (L3) für das niedrig konzentrierte Wasser aufweist, die die Sub-Einheiten (8, 12) verbinden, und wobei die Vorrichtung einen Druckänderungsmechanismus aufweist, der zumindest auf dem Kanal (L4) für das hoch konzentrierte Wasser oder dem Kanal (L3) für das niedrig konzentrierte Wasser angeordnet ist, und
- wobei das Verfahren ein Steuern der Vorrichtung aufweist, sodass ein Maximalwert einer Permeationsmenge pro Membranbereich von zumindest einer Sub-Einheit (8, 12) auf einem festgelegten Wert oder kleiner gehalten wird.

13. Verfahren zum Betätigen einer Konzentrationsunterschied-Stromerzeugungsvorrichtung gemäß Anspruch 12, die einen Betrieb aufweist, bei dem gemäß eines SDI (Schwemmstoffdichte-Index) des niedrig konzentrierten Wassers, der gemäß der ASTM D 4189-95 gemessen wird, der maximale Wert der Permeationsmenge pro Membranbereich der Sub-Einheit auf 42,5 Liter pro Stunde oder weniger reguliert wird, wenn SDI < 1 ist, und der maximale Wert davon auf (50 - 7,5* SDI) Liter pro Stunde oder weniger reguliert wird, wenn 1 <= SDI <= 5 ist.

## Revendications

1. Appareil de production d'énergie par différence de concentration dans lequel de l'eau à haute concentration et de l'eau à faible concentration qui ont des concentrations différentes sont mises en contact par l'intermédiaire d'une unité à membrane semi-perméable (100) comprenant une membrane semi-perméable, et une augmentation résultante d'une quantité de l'eau à haute concentration due à une perméation d'eau du côté faible concentration vers le côté haute concentration provoquée par une pression osmotique motrice est utilisée pour entraîner un générateur électrique (13) afin de générer de l'électricité,
dans lequel l'unité à membrane semi-perméable (100) est divisée en une pluralité de sous-unités (8, 12) et comprend un canal intermédiaire côté haute concentration (L4) et un canal intermédiaire côté faible concentration (L3) qui relient les sous-unités (8, 12), et
l'appareil de production d'énergie par différence de concentration comprend un mécanisme de changement de pression disposé sur au moins l'un parmi le canal intermédiaire côté haute concentration (L4) et le canal intermédiaire côté faible concentration (L3).

2. Appareil de production d'énergie par différence de concentration selon la revendication 1, dans lequel le mécanisme de changement de pression comprend au moins une unité parmi une unité de récupération d'énergie (20, 22, 23, 23a) et une unité de dessalement (27).

3. Appareil de production d'énergie par différence de concentration selon la revendication 2, dans lequel le mécanisme de changement de pression comprend une unité de récupération d'énergie de type isobare.

4. Appareil de production d'énergie par différence de concentration selon l'une quelconque des revendications 1 à 3, qui comprend un canal de dérivation (L11) pour fournir une partie de l'eau à faible concentration devant être fournie à une sous-unité située en amont dans le sens d'écoulement de l'eau à faible concentration, à au moins une sous-unité située en aval.

5. Appareil de production d'énergie par différence de concentration selon l'une quelconque des revendications 1 à 4, qui comprend en outre un canal permettant de fournir, au générateur électrique (13), une partie de l'eau à haute concentration évacuée d'une sous-unité située en amont dans le sens d'écoulement de l'eau à haute concentration,
et comprend un canal permettant de fournir le reste de l'eau à haute concentration évacuée à au moins une sous-unité située en aval.

6. Appareil de production d'énergie par différence de concentration selon l'une quelconque des revendications 1 à 5, qui comprend une unité de récupération d'énergie (22) disposée au niveau d'une sortie d'au moins une sous-unité, sur le canal intermédiaire (L41 - L42) pour l'eau à haute concentration, et
l'unité de récupération d'énergie (10) augmente une pression de la sous-unité ou d'une sous-unité située en amont de celle-ci.

7. Appareil de production d'énergie par différence de concentration selon l'une quelconque des revendications 1 à 6, qui est configuré de sorte que l'eau à haute concentration et l'eau à faible concentration soient fournies sensiblement en parallèle l'une à l'autre, aux sous-unités (8, 12).

8. Appareil de production d'énergie par différence de concentration selon l'une quelconque des revendications 1 à 6, qui est configuré de sorte que l'eau à haute concentration et l'eau à faible concentration soient fournies sensiblement à contre-courant l'une par rapport à l'autre, aux sous-unités (8, 12).

9. Appareil de production d'énergie par différence de concentration selon l'une quelconque des revendications 1 à 8, qui comprend une pompe de surpression (7, 18, 18a), comme étant le mécanisme de changement de pression, sur au moins l'un des canaux intermédiaires (L31 - L32) pour l'eau à faible concentration disposée entre les sous-unités.

10. Appareil de production d'énergie par différence de concentration selon l'une quelconque des revendications 1 à 9, qui comprend une pompe de surpression (7, 18, 18a), comme étant le mécanisme de changement de pression, sur au moins l'un des canaux intermédiaires (L41 - L42) pour l'eau à haute concentration disposée entre les sous-unités.

11. Appareil de production d'énergie par différence de concentration selon la revendication 9 ou 10, dans lequel l'appareil comprend une unité de récupération d'énergie de type isobare comme étant le mécanisme de changement de pression,
l'unité de récupération d'énergie de type isobare est reliée au canal d'évacuation côté réception de pression, et
le canal d'évacuation côté réception de pression est relié à une unité de production d'énergie.

12. Procédé permettant de faire fonctionner un appareil de production d'énergie par différence de concentration,
dans lequel, dans l'appareil de production d'énergie par différence de concentration, l'eau à haute concentration et l'eau à faible concentration qui ont des concentrations différentes sont mises en contact par l'intermédiaire d'une unité à membrane semi-perméable (100) comprenant une membrane semi-perméable, et une augmentation résultante d'une quantité de l'eau à haute concentration due à une perméation d'eau à partir d'un côté faible concentration vers un côté haute concentration provoquée par une pression osmotique motrice est utilisée pour entraîner un générateur électrique (13) afin de générer de l'électricité,
l'unité à membrane semi-perméable (100) est divisée en une pluralité de sous-unités (8, 12) et comprend un canal (L4) pour l'eau à haute concentration et un canal (L3) pour l'eau à faible concentration qui relient les sous-unités (8, 12), et l'appareil comprend un mécanisme de changement de pression disposé sur au moins l'un parmi le canal (L4) pour l'eau à haute concentration et le canal (L3) pour l'eau à faible concentration, et
le procédé comprend le fait de commander l'appareil de sorte qu'une valeur maximale d'une quantité de perméation par zone de membrane d'au moins une sous-unité (8, 12) soit maintenue à une valeur inférieure ou égale à une valeur définie.

13. Procédé permettant de faire fonctionner un appareil de production d'énergie par différence de concentration selon la revendication 12, qui comprend une opération dans laquelle, conformément au SDI (pouvoir colmatant) de l'eau à faible concentration mesuré conformément à la norme ASTM D 418995, la valeur maximale de la quantité de perméation par zone de membrane de la sous-unité est régulée à 42,5 Imh ou moins lorsque SDI < 1, et la valeur maximale de celle-ci étant régulée à (50-7,5*SDI) Imh ou moins lorsque 1 ≤ SDI ≤ 5.
